(19)

Europäisches
Patentamt
European
Patent Office
Office européen
des brevets

(11)  **EP 3 595 039 A1**

(12)  **EUROPEAN PATENT APPLICATION**
published in accordance with Art. 153(4) EPC

(43) Date of publication:
 **15.01.2020  Bulletin 2020/03**

(21) Application number: **18763479.5**

(22) Date of filing: **01.03.2018**

(51) Int Cl.:
 *H01M 2/16* (2006.01)    *H01M 4/13* (2010.01)
 *H01M 10/058* (2010.01)

(86) International application number:
 **PCT/JP2018/007853**

(87) International publication number:
 **WO 2018/163969 (13.09.2018 Gazette 2018/37)**

(84) Designated Contracting States:
 **AL AT BE BG CH CY CZ DE DK EE ES FI FR GB
 GR HR HU IE IS IT LI LT LU LV MC MK MT NL NO
 PL PT RO RS SE SI SK SM TR**
 Designated Extension States:
 **BA ME**
 Designated Validation States:
 **KH MA MD TN**

(30) Priority:  **08.03.2017  JP 2017044200**

(71) Applicant: **Zeon Corporation
 Tokyo 100-8246 (JP)**

(72) Inventors:
 • **ASAI Kazuki
  Tokyo 100-8246 (JP)**
 • **YAMAMOTO Norikazu
  Tokyo 100-8246 (JP)**

(74) Representative: **Parchmann, Stefanie
 Maiwald Patentanwalts- und
 Rechtsanwaltsgesellschaft mbH
 Elisenhof
 Elisenstraße 3
 80335 München (DE)**

(54)  **BINDER COMPOSITION FOR NON-AQUEOUS SECONDARY CELL FUNCTION LAYER,
SLURRY COMPOSITION FOR NON-AQUEOUS SECONDARY CELL FUNCTION LAYER,
FUNCTION LAYER FOR NON-AQUEOUS SECONDARY CELL, SEPARATOR PROVIDED WITH
FUNCTION LAYER FOR NON-AQUEOUS SECONDARY CELL, NON-AQUEOUS SECONDARY
CELL, AND METHOD FOR PRODUCING SAME**

(57)    Provided is a binder composition for non-aqueous secondary battery functional layers comprising a an organic solvent having a boiling point under 1 atm of 30°C or higher and 100°C or lower, and a polymer A comprising (meth)acrylonitrile monomer unit and a (meth)acrylic acid ester monomer unit.

EP 3 595 039 A1

**Description**

TECHNICAL FIELD

The present disclosure relates to a binder composition for non-aqueous secondary battery functional layers, a slurry composition for non-aqueous secondary battery functional layers, a non-aqueous secondary battery functional layer, a functional layer attached-separator for a non-aqueous secondary battery, a non-aqueous secondary battery, and a method of producing a non-aqueous secondary battery.

BACKGROUND

Non-aqueous secondary batteries (hereinafter, also referred to simply as "secondary batteries"), such as lithium ion secondary batteries, have characteristics such as compact size, light weight, high energy density, and the ability to be repeatedly charged and discharged, and are used in a wide variety of applications. A secondary battery generally includes battery members, such as positive and negative electrodes, and a separator that isolates the positive electrode and the negative electrode from one another thereby preventing short-circuiting between the positive and negative electrodes. In some secondary batteries, functional layers are provided on these battery members, for the purpose of improving the adhesiveness, heat resistance, and strength, for example.

Examples of functional layers include, for example, a porous layer formed by binding non-conductive particles, such as organic particles or inorganic particles, with a binder. Such a functional layer is typically formed by preparing a slurry composition (hereinafter, also referred to as a "slurry composition for functional layers") containing non-conductive particles and component(s), such as a composition containing a binder (hereinafter, also referred to as a "binder composition for functional layers"), that are dissolved or dispersed in a dispersion medium, applying the slurry composition onto a substrate, such as a substrate for an electrode or a separator, and drying the applied slurry composition.

Thus, in recent years, efforts have been made for improving functional layers, particularly, binder compositions and slurry compositions used to form functional layers, in order to provide secondary batteries having even higher performances.

For example, in Patent Literature 1, a solution of N-methylpyrrolidone (NMP) is prepared, which is a copolymer of a (meth)acrylonitrile monomer unit and a (meth)acrylic acid ester monomer unit. Then in Patent Literature 1, alumina as non-conductive particles is mixed with the resultant copolymer NMP solution and additional NMP is added for dispersing the non-conductive particles into the solution, to thereby obtain a slurry for porous membranes which enables formation of porous membranes contributable to improve the smoothness and oxidation resistance of separators.

CITATION LIST

Patent Literature

Patent Literature 1: JP4569718B

SUMMARY

(Technical Problem)

In the meantime, a binder composition for functional layers and a slurry composition for functional layers may be required to be capable of forming functional layers that can provide favorable bonding between battery members (e.g., electrodes and a separator) during a production of a secondary battery by overlapping the electrodes and the separator one another, for example, and, at the same time, ensuring a high solubility of polymer components to be contained in the functional layers into the solvent. In the conventional art disclosed in Patent Literature 1, however, there is still room for improvement in terms of providing functional layers with excellent adhesiveness while also enhancing solubility of the polymer components in the binder composition.

In addition, in general, a secondary battery comprising a functional layer(s) formed from a binder composition for functional layers and a slurry composition for functional layers is required to have suitable output characteristics, such as the low-temperature output characteristic.

Accordingly, an object of the present disclosure is to provide a binder composition for functional layers which has excellent solubility of polymer components and enables formation of functional layer capable of providing favorable bonding between battery members.

Another object of the present disclosure is to provide a functional layer capable of providing favorable bonding between battery members and allowing a secondary battery to exhibit a favorable low-temperature output characteristic, a functional layer-attached separator having this functional layer attached thereto, and a slurry composition for functional layers which enables formation of such a functional layer.

Yet another object of the present disclosure is to provide a non-aqueous secondary battery having a favorable low-temperature output characteristic and a method of producing the same.

(Solution to Problem)

The inventors conducted diligent investigations aimed at solving the problems described above. The inventors then discovered that a binder composition for functional layers with well-dissolved polymer components could be prepared using a Polymer A having a certain composition and an organic solvent having a certain boiling point. The inventors also discovered that a slurry composition for functional layers containing this binder composition enables provision of a functional layer capable of providing favorable bonding between battery members (e.g., electrodes and a separator) and a functional layer-attached separator provided with such a functional layer. The inventors further discovered that a secondary battery provided with this functional layer(s) at a certain location(s) exhibited a favorable low-temperature output characteristic, and that a secondary battery having a favorable low-temperature output characteristic could be produced by bonding battery members to each other via such functional layer(s), thereby completing the present disclosure.

Specifically, an object of the present disclosure is to advantageously solve the aforementioned issues, and a binder composition for non-aqueous secondary battery functional layers of the present disclosure is a binder composition for non-aqueous secondary battery functional layers comprising a polymer A and an organic solvent, wherein the organic solvent has a boiling point under 1 atm of 30°C or higher and 100°C or lower, and the polymer A contains a (meth)acrylonitrile monomer unit and a (meth)acrylic acid ester monomer unit. The binder composition comprising the Polymer A having the certain composition and the organic solvent having a boiling point within the certain range exhibits excellent solubility of the polymer components. The binder composition can be used to produce functional layers capable of providing favorable bonding between battery members and a secondary battery having a favorable low-temperature output characteristic.

The term "(meth)acrylo" as used herein means acrylo and/or methacrylo, and the term "(meth)acrylic acid" means acrylic acid and/or methacrylic acid.

The term "includes a monomer unit" used in the present disclosure means that "a polymer obtained with the monomer includes a structural unit derived from the monomer".

Here, in the binder composition for non-aqueous secondary battery functional layers of the present disclosure, the Polymer A preferably has a ratio of tetrahydrofuran (THF) insoluble component of 35% by mass or more and 95% by mass or less. The reason is that, when the ratio of tetrahydrofuran (THF) insoluble component of the Polymer A is within the aforementioned certain range, a functional layer formed using a slurry composition containing the binder composition can provide more favorable bonding between battery members. Moreover, when the ratio of THF insoluble component of the Polymer A is within the aforementioned certain range, the low-temperature output characteristic is further improved in a secondary battery having a functional layer(s) formed using a slurry composition containing the binder composition at a certain location(s).

In this disclosure, the "ratio of tetrahydrofuran (THF) insoluble component" can be determined by the procedure that will be described in Examples in the present specification.

Preferably, in the binder composition for non-aqueous secondary battery functional layers of the present disclosure, the organic solvent is preferably a polar solvent. This is because the polar solvent can increase the solubility of the polymer components in the binder composition.

Moreover, in the binder composition for non-aqueous secondary battery functional layers of the present disclosure, the Polymer A preferably further contains 0.1% by mass or more and 10% by mass or less of an epoxy group-containing monomer unit. This is because a polymer A further containing the epoxy group-containing monomer unit in the aforementioned percentage content can provide an excellent stability of a slurry composition containing the binder composition while ensuring the solubility of the polymer components in the binder composition.

The "percentage content of each monomer unit" in the present disclosure can be measured by a nuclear magnetic resonance (NMR) method such as $^1$H-NMR.

Moreover, in the binder composition for non-aqueous secondary battery functional layers of the present disclosure, the Polymer A preferably further contains 0.1% by mass or more and 20% by mass or less of a hydroxyl group-containing monomer unit. This is because a polymer A further containing the hydroxyl group-containing monomer unit in the aforementioned percentage content can further enhance the solubility of the polymer components in the binder composition while ensuring a suitable stability of the slurry composition.

Moreover, an object of the present disclosure is to advantageously solve the aforementioned issues, and a non-aqueous secondary battery functional layer of the present disclosure comprises non-conductive particles and the aforementioned binder composition for non-aqueous secondary battery functional layers. The slurry composition containing the non-conductive particles and the binder composition enables formation of functional layers capable of providing favorable bonding between battery members and enabling formation of a secondary battery with a favorable low-temperature output characteristic.

Here, preferably, the slurry composition for non-aqueous secondary battery functional layers further contains a polymer B and the polymer B is a fluorine-containing polymer. This is because a slurry composition further containing the polymer B that is the fluorine-containing polymer enables formation of a functional layer capable of further enhancing the low-temperature output characteristic of the secondary battery. In addition, the slurry composition further containing the polymer B that is the fluorine-containing polymer sufficiently prevents sticking (i.e., blocking) of elongate functional layer-attached battery members provided with functional layers (e.g., functional layer-attached electrodes and functional layer-attached separators) when they are rolled for storage and transportations during production processes of secondary batteries, for example.

In addition, in the slurry composition for non-aqueous secondary battery functional layers of the present disclosure, preferably, the polymer A has a degree of swelling in electrolyte solution of 4 times or more and 30 times or less, and the polymer B has a degree of swelling in electrolyte solution is 1 time or more and 4 times or less. This is because a polymer A and a polymer B having degrees of swelling in electrolyte solution within the aforementioned respective ranges further enhance the low-temperature output characteristic of a secondary battery provided with functional layer(s) formed from the slurry composition.

In the present disclosure, the "degree of swelling in electrolyte solution" can be measured by the procedure that will be described in Examples in the present specification.

In the slurry composition for non-aqueous secondary battery functional layers of the present disclosure, the degree of swelling in electrolyte solution of the polymer A is preferably more than 4 times. This is because a degree of swelling in electrolyte solution of the polymer A of more than 4 times even further enhances the low-temperature output characteristic of a secondary battery provided with functional layer(s) formed from the slurry composition.

In addition, in the slurry composition for non-aqueous secondary battery functional layers of the present disclosure, the content of the polymer A is 1 part by mass or more and 50 parts by mass or less in terms of solid content, per 100 parts by mass of a total content of the polymer A and the polymer B. This is because a slurry composition containing the polymer A and the polymer B in the ratio of contents within the aforementioned range enables formation of functional layers that can provide more favorable bonding between battery members and can further enhance the low-temperature output characteristic of a secondary battery. Additionally, the slurry composition containing the polymer A and the polymer B in the ratio of contents within the aforementioned range can also prevent blocking of functional layer-attached battery members.

In addition, in the slurry composition for non-aqueous secondary battery functional layers of the present disclosure, a content of the component other than the non-conductive particles is preferably 1 part by mass or more and 100 parts by mass or less in terms of solid content, relative to 100 parts by mass of the non-conductive particles. This is because a slurry composition containing the component other than the non-conductive particles in a content within the aforementioned range can provide a further favorable bonding between battery members. Moreover, the slurry composition containing the component other than the non-conductive particles in a content within the aforementioned range can further prevent blocking of functional layer-attached battery members.

Moreover, an object of the present disclosure is to advantageously solve the aforementioned issues, and a non-aqueous secondary battery functional layer of the present disclosure is made using any of the aforementioned slurry compositions for non-aqueous secondary battery functional layers. A functional layer formed by using the aforementioned slurry composition can provide favorable bonding between battery members (e.g., electrodes and a separator) and enable a secondary battery to exhibit a favorable low-temperature output characteristic.

Furthermore, an object of the present disclosure is to advantageously solve the aforementioned issues, and a functional layer attached-separator for a non-aqueous secondary battery of the present disclosure comprises a substrate and the aforementioned non-aqueous secondary battery functional layer formed on at least one surface of the separator substrate. A functional layer-attached separator comprising the aforementioned non-aqueous secondary battery functional layer formed on the at least one surface of the separator substrate can appropriately adhere to battery members (e.g., electrodes) and allow a secondary battery to exhibit a favorable low-temperature output characteristic.

In the functional layer attached-separator for a non-aqueous secondary battery of the present disclosure, the separator substrate is preferably a porous resin film. A functional layer-attached separator comprising the aforementioned non-aqueous secondary battery functional layer formed on the at least one surface of the porous resin film can more appropriately adhere to battery members (e.g., electrodes) and allows a secondary battery to exhibit further a more favorable low-temperature output characteristic.

Furthermore, an object of the present disclosure is to advantageously solve the aforementioned issues, and a secondary battery of the present disclosure comprises a positive electrode, a negative electrode, a separator, and the aforementioned non-aqueous secondary battery functional layer between at least one of the positive electrode or the negative electrode and the separator. The secondary battery comprising the aforementioned functional layer at the aforementioned certain location can exhibit a favorable low-temperature output characteristic.

Furthermore, an object of the present disclosure is to advantageously solve the aforementioned issues, and a method of producing a non-aqueous secondary battery of the present disclosure comprises the step of bonding between at least one of the positive electrode or the negative electrode and the separator, by the non-aqueous secondary battery functional layer. When, in the production of a secondary battery comprising a positive electrode, a negative electrode, a separator, and the aforementioned functional layer in a certain positional relationship, the step of bonding between at least one of the positive electrode or the negative electrode and the separator, by the non-aqueous secondary battery functional layer, is included, a favorable adhesion of the electrode(s) and the separator(s) is provided and a secondary battery having a favorable low-temperature output characteristic can be provided.

Here, in the method of producing a non-aqueous secondary battery of the present disclosure, the step of bonding preferably comprises pressing and/or heating a battery member laminate comprising the at least one of the positive electrode or the negative electrode, and the separator, having the non-aqueous secondary battery functional layer interposed therebetween. Upon bonding the at least one of the positive electrode or the negative electrode, with the separator, having the functional layer interposed therebetween, when the battery member laminate comprising the positive electrode and the separator and/or the negative electrode and the separator, having the functional layer interposed therebetween, is pressed and/or heated, a more favorable adhesion of the electrode(s) and the separator(s) is provided and a secondary battery having a more favorable low-temperature output characteristic can be obtained.

(Advantageous Effect)

In accordance with the present disclosure, a binder composition for functional layers is provided which has an excellent solubility of the polymer components and enables formation of functional layers capable of providing favorable bonding between battery members.

Moreover, in accordance with the present disclosure, also provided are a functional layer capable of providing favorable bonding between battery members and enabling formation of a secondary battery with a favorable low-temperature output characteristic, a functional layer-attached separator having this functional layer, and a slurry composition for functional layers which enables formation of such a functional layer.

Furthermore, in accordance with the present disclosure, also provided are a non-aqueous secondary battery having a favorable low-temperature output characteristic and a method of producing the same.

DETAILED DESCRIPTION

Embodiments of the present disclosure will be described in detail below.

A binder composition for non-aqueous secondary battery functional layers of the present disclosure can be used for preparation of a slurry composition for non-aqueous secondary battery functional layers. Moreover, the slurry composition for non-aqueous secondary battery functional layers prepared using the binder composition for non-aqueous secondary battery functional layers of the present disclosure can be used to form a non-aqueous secondary battery functional layer to be provided in a non-aqueous secondary battery, such as a lithium ion secondary battery. In addition, the slurry composition for non-aqueous secondary battery functional layers can also be used for production of electrode members (electrodes and a separator) having functional layers attached thereto (functional layer-attached electrodes and functional layer-attached separators), to be provided in a non-aqueous secondary battery, such as a lithium ion secondary battery. The non-aqueous secondary battery functional layers of the present disclosure can be used to produce, for example, a non-aqueous secondary battery of the present disclosure. The non-aqueous secondary battery of the present disclosure can be produced according to a method of producing a non-aqueous secondary battery of the present disclosure, for example.

Note that the binder composition for non-aqueous secondary battery functional layers and the slurry composition for non-aqueous secondary battery functional layers of the present disclosure are particularly suitable for forming functional layers on separator substrates, to thereby produce functional layer-attached separators.

(Binder composition for non-aqueous secondary battery functional layers)

A binder composition for non-aqueous secondary battery functional layers of the present disclosure comprises a polymer A and an organic solvent, wherein the organic solvent has a boiling point under 1 atm of 30°C or higher and 100°C or lower, and the polymer A contains a (meth)acrylonitrile monomer unit and a (meth)acrylic acid ester monomer unit. In addition, the binder composition for non-aqueous secondary battery functional layers of the present disclosure may further contain an additive, in addition to the polymer A and the organic solvent. Since the binder composition for non-aqueous secondary battery functional layers of the present disclosure contains at least the organic solvent having a boiling point within the aforementioned range and the polymer A having the aforementioned two certain monomer units, the polymer A is favorably dissolved. The binder composition for non-aqueous secondary battery functional layers of the present disclosure can be used in preparation of a slurry composition that enables formation of functional layers capable of providing favorable bonding between battery members and allowing a secondary battery to exhibit a favorable low-temperature output characteristic.

<Polymer A>

The polymer A is required to contain a (meth)acrylonitrile monomer unit and a (meth)acrylic acid ester monomer unit, and may optionally contain an additional monomer unit other than the (meth)acrylonitrile monomer unit and the (meth)acrylic acid ester monomer unit. If the binder composition contains does not contain the polymer A containing the above certain monomer units, the solubility of the polymer A in the binder composition would be insufficient. If the binder composition does not contain the polymer A containing the above certain monomer units, preparation of a slurry composition that enables formation of functional layer capable of providing favorable bonding between battery members (e.g., electrodes and a separator) would be impossible.

In this disclosure, the "polymer A" mainly contains a repeating unit (hereinafter also referred to as a "non-fluorine-containing monomer unit") derived from monomers not containing fluorine (hereinafter also referred to as a "non-fluorine-containing monomers") as the monomer unit Specifically, in the "polymer A", the percentage content of the repeating unit (hereinafter also referred to as a "fluorine-containing monomer unit") derived from monomers containing fluorine (hereinafter also referred to as "fluorine-containing monomers") is typically 30% by mass or less, and is preferably 20% by mass or less, more preferably 1% by mass or less, and even more preferably 0% by mass (it contains no fluorine-containing monomer).

[(Meth)acrylonitrile monomer unit]

--Type--

Examples of (meth)acrylonitrile monomer that can form the (meth)acrylonitrile monomer unit contained in the polymer A include acrylonitrile and methacrylonitrile. In addition, the (meth)acrylonitrile monomer unit may include only a repeating unit derived from acrylonitrile or a repeating unit derived from methacrylonitrile, or may include both a repeating unit derived from acrylonitrile and a repeating unit derived from methacrylonitrile at a certain ratio.

Of these, the (meth)acrylonitrile monomer is preferably acrylonitrile.

--Percentage content--

The percentage content of the (meth)acrylonitrile monomer unit in the polymer A is preferably 5% by mass or more, and more preferably 10% by mass or more, and is preferably 25% by mass or less, and more preferably 20% by mass or less. This is because a percentage content of the (meth)acrylonitrile monomer unit of not less than any of the aforementioned lower limits increases the strength of the polymer A and enables functional layers formed using a slurry composition containing the binder composition to provide more favorable bonding between battery members (e.g., electrodes and a separator). Moreover, a percentage content of the (meth)acrylonitrile monomer unit of not more than any of the aforementioned upper limits further facilitates dissolution of the polymer A in the organic solvent described later, thereby enhancing the solubility of the polymer A in the binder composition.

[(Meth)acrylic acid ester monomer unit]

--Type--

Examples of the (meth)acrylic acid ester monomers capable of forming the (meth)acrylic acid ester monomer unit contained in the polymer A include acrylic acid alkyl esters, such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters, such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. One of these may be used individually, or two or more of these may be used in combination in an arbitrary ratio.

Of these, the (meth)acrylic acid ester monomer is preferably acrylic acid alkyl ester, and more preferably ethyl acrylate.

Note that in the present disclosure, (meth)acrylic acid ester monomers containing an epoxy group, a hydroxyl group, and a sulfonate group are referred to as an "epoxy group-containing monomer", "hydroxyl group-containing monomer", and "sulfonate group-containing monomer", respectively, for example.

--Percentage content--

The percentage content of the (meth)acrylic acid ester monomer unit in the polymer A is preferably 65% by mass or more, and more preferably 70% by mass or more, and is preferably 90% by mass or less, and more preferably 80% by mass or less. This is because a percentage content of the (meth)acrylic acid ester monomer unit of not less than any of the aforementioned lower limits further facilitates dissolution of the polymer A in the organic solvent described later, thereby enhancing the solubility of the polymer A in the binder composition. Moreover, a percentage content of the (meth)acrylic acid ester monomer unit of not more than any of the aforementioned upper limits increases the strength of the polymer A and enables functional layers formed using a slurry composition containing the binder composition to provide more favorable bonding between battery members (e.g., electrodes and a separator).

[Additional monomer unit]

An additional monomer unit(s) that can be contained in the polymer A are not particularly limited except for the (meth)acrylonitrile monomer unit and the (meth)acrylic acid ester monomer unit, yet a non-fluorine-containing monomer is preferred. Examples of the additional monomer unit include an epoxy group-containing monomer unit, a hydroxyl group-containing monomer unit, a sulfonate group-containing monomer unit, a phosphate group-containing monomer unit, a carboxy group-containing monomer unit, an aromatic vinyl monomer unit, and an aliphatic conjugated diene monomer unit.

Of these, the polymer A preferably further contains a hydroxyl group-containing monomer unit, from the perspective of further increasing the solubility of the polymer A in the binder composition. Moreover, the polymer A preferably further contains an epoxy group-containing monomer unit, from the perspective of increasing the stability of the slurry by causing the components in the slurry composition including the binder composition to be dispersed suitably. The polymer A more preferably contains both an epoxy group-containing monomer unit and a hydroxyl group-containing monomer unit.

-Epoxy group-containing monomer unit-

--Type--

Examples of epoxy group-containing monomers capable of forming the epoxy group-containing monomer unit that may be further included in the polymer A include unsaturated glycidyl ethers such as vinyl glycidyl ether, allyl glycidyl ether, butenyl glycidyl ether, and o-allylphenyl glycidyl ether; diene or polyene monoepoxides such as butadiene monoepoxide, chloroprene monoepoxide, 4,5-epoxy-2-pentene, 3,4-epoxy-1-vinyl cyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid. One of these may be used individually, or two or more of these may be used in combination in an arbitrary ratio.

Of these, the epoxy group-containing monomer unit is preferably allyl glycidyl ether (AGE) and glycidyl methacrylate (GMA).

--Percentage content--

The percentage content of the epoxy group-containing monomer unit in the polymer A is preferably 0.1% by mass or more, more preferably 1% by mass or more, and even more preferably 3% by mass or more, and is preferably 10% by mass or less, more preferably 8% by mass or less, and even more preferably 7% by mass or less. This is because a percentage content of the epoxy group-containing monomer unit of not less than any of the aforementioned lower limits facilitates favorable dispersion of components, including the binder composition, in a slurry composition, thereby providing a favorable slurry stability. Moreover, a percentage content of the epoxy group-containing monomer unit of not more than any of the aforementioned upper limits further facilitates suitable dispersion of the polymer A in the organic solvent described later, thereby further enhancing the solubility of the polymer A in the binder composition.

-Hydroxyl group-containing monomer unit-

--Type--

Examples of hydroxy group-containing monomers contained in the hydroxyl group-containing monomer unit that may be further included in the polymer A include ethylenically unsaturated alcohols such as (meth)allyl alcohol, 3-buten-1-ol, and 5-hexen-1-ol; alkanol esters of ethylenically unsaturated carboxylic acids such as acrylic acid-2-hydroxyethyl ($\beta$-hydroxyethyl acrylate), acrylic acid-2-hydroxypropyl, methacrylic acid-2-hydroxyethyl, methacrylic acid-2-hydroxypropyl, maleic acid-di-2-hydroxyethyl, maleic acid-di-4-hydroxybutyl, and itaconic acid-di-2-hydroxypropyl; esters of (meth)acrylic acid and polyalkylene glycol represented by a general formula $CH_2=CR^1\text{-}COO\text{-}(C_qH_{2q}O)_p\text{-}H$ (where p represents an integer of 2 to 9, q represents an integer of 2 to 4, and $R^1$ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether. One of these may be used individually, or two or more of these may be used in combination in an arbitrary ratio.

In the present disclosure, "(meth)allyl" is used to indicate "allyl" and/or "methallyl", and "(meth)acryloyl" is used to indicate "acryloyl" and/or "methacryloyl".

Of these, the hydroxyl group-containing monomer is preferably one of alkanol esters of ethylenically unsaturated carboxylic acids, and more preferably $\beta$-hydroxyethyl acrylate ($\beta$-HEA).

--Percentage content--

The percentage content of the hydroxyl group-containing monomer unit in the polymer A is preferably 0.1% by mass or more, more preferably 3% by mass or more, and even more preferably 5% by mass or more, and is preferably 20% by mass or less, more preferably 15% by mass or less, and even more preferably 10% by mass or less. This is because a percentage content of the hydroxyl group-containing monomer unit of not less than any of the aforementioned lower limits even further facilitates suitable dispersion of the polymer A in the organic solvent described later, thereby even further enhancing the solubility of the polymer A in the binder composition. Moreover, a percentage content of the hydroxyl group-containing monomer unit of not more than any of the aforementioned upper limits facilitates further favorable dispersion of components, including the binder composition, in a slurry composition, thereby providing the slurry with a more favorable stability.

--Sulfonate group-containing monomer unit--

--Type--

Examples of sulfonate group-containing monomers capable of forming the sulfonate group-containing monomer unit include, but are not limited to, vinyl sulfonic acid, methyl vinyl sulfonic acid, (meth)allyl sulfonic acid, (meth)acrylic acid-2-ethyl sulfonate, 2-acrylamido-2-methylpropane sulfonic acid, and 3-allyloxy-2-hydroxypropane sulfonic acid. One of these may be used individually, or two or more of these may be used in combination in an arbitrary ratio.

Of these, the sulfonate group-containing monomer unit is preferably 2-acrylamido-2-methylpropane sulfonic acid (AMPS).

--Percentage content--The percentage content of the sulfonate group-containing monomer in the polymer A is preferably 0.1% by mass or more, and more preferably 0.3% by mass or more, and is preferably 5% by mass or less, and more preferably 1% by mass or less. This is because a percentage content of the sulfonate group-containing monomer unit of not less than any of the aforementioned lower limits even further facilitates suitable dispersion of the polymer A in the organic solvent described later, thereby even further enhancing the solubility of the polymer A in the binder composition. Moreover, a percentage content of the sulfonate group-containing monomer unit of not more than any of the aforementioned upper limits facilitates favorable dispersion of components, including the binder composition, in a slurry composition, thereby providing a favorable slurry stability.

-Phosphate group-containing monomer unit-

Examples of phosphate group-containing monomers capable of forming the phosphate group-containing monomer unit include, but are not limited to, 2-(meth)acryloyloxyethyl phosphate, methyl-2-(meth)acryloyloxyethyl phosphate, and ethyl-(meth)acryloyloxyethyl phosphate. One of these may be used individually, or two or more of these may be used in combination in an arbitrary ratio.

--Carboxy group-containing monomer unit--

Examples of carboxy group-containing monomers capable of forming the carboxy group monomer unit include, but are not limited to, ethylenically unsaturated monocarboxylic acids and derivatives thereof and ethylenically unsaturated dicarboxylic acids, acid anhydrides thereof, and derivatives thereof. Examples of ethylenically unsaturated monocarboxylic acids that can be used include acrylic acid, methacrylic acid, and crotonic acid. Examples of derivatives of the ethylenically unsaturated monocarboxylic acid include 2-ethylacrylic acid, isocrotonic acid, $\alpha$-acetoxyacrylic acid, $\beta$-*trans*-aryloxyacrylic acid, $\alpha$-chloro-$\beta$-E-methoxyacrylic acid, and $\beta$-diaminoacrylic acid. Examples of ethylenically unsaturated dicarboxylic acids include maleic acid, fumaric acid, and itaconic acid. Examples of acid anhydrides of the ethylenically unsaturated dicarboxylic acids include maleic anhydride, acrylic anhydride, methylmaleic anhydride, and dimethylmaleic anhydride. Examples of derivatives of the ethylenically unsaturated dicarboxylic acid include maleic acid methylallyl, such as methylmaleic acid, dimethylmaleic acid, phenylmaleic acid, chloromaleic acid, dichloromaleic acid, fluoromaleic acid; and maleic acid esters, such as diphenyl maleate, nonyl maleate, decyl maleate, dodecyl maleate, octadecyl maleate, fluoroalkyl maleate, or other . One of these may be used individually, or two or more of these may be used in combination in an arbitrary ratio.

--Aromatic vinyl monomer unit--

Examples of aromatic vinyl monomers capable of forming the aromatic vinyl monomer unit include, but are not limited to, styrene, styrenesulfonic acid and salts thereof, $\alpha$-methylstyrene, *p-t*-butylstyrene, butoxystyrene, vinyltoluene, chlorostyrene, and vinylnaphthalene. One of these may be used individually, or two or more of these may be used in combination in an arbitrary ratio.

--Aliphatic conjugated diene monomer unit--

Examples of aliphatic conjugated diene monomers capable of forming the aliphatic conjugated diene monomer unit include, but are not limited to, 1,3-butadiene, 2-methyl-1,3-butadiene (isoprene), 2,3-dimethyl-1,3-butadiene, 2-ethyl-1,3-butadiene, 1,3-pentadiene, and 2-chloro-1,3-butadiene. One of these may be used individually, or two or more of these may be used in combination in an arbitrary ratio.

[Method of preparing polymer A]

No specific limitations are placed on the mode of polymerization of the polymer A. For example, any method among solution polymerization, suspension polymerization, bulk polymerization, and emulsion polymerization may be used. Moreover, the polymerization reaction may be addition polymerization such as ionic polymerization, radical polymerization, or living radical polymerization. The polymerization may be carried out with a commonly used emulsifier, dispersant, polymerization initiator, chain transfer agent, or the like that are usable for polymerization, and the amount thereof may also be the same as commonly used.

[Properties]

--Proportion of THF insoluble component--

The proportion of tetrahydrofuran (THF) insoluble component of the polymer A is preferably 35% by mass or more, more preferably 45% by mass or more, and even more preferably 50% by mass, and is preferably 95% by mass or less, more preferably 90% by mass or less, and even more preferably 85% by mass or less. The reason is in that a proportion of THF insoluble component of not less than any of the aforementioned lower limits prevents the polymer A from eluting into an electrolyte solution in a secondary battery and further enhances the low-temperature output characteristic of the secondary battery. Moreover, when the proportion of THF insoluble component is not more than any of the aforementioned upper limits, upon bonding battery members (e.g., electrodes and a separator) with a functional layer formed from a slurry composition containing the binder composition, for example, when a battery member laminate formed by laminating the battery members with the functional layer is pressed, the polymer A in the functional layer easily deforms in response to the pressure, which provides more favorable bonding between battery members.

In the present disclosure, the "THF insoluble component" of the polymer A can be adjusted by any suitable means, e.g., by changing the types and the amounts of the monomers used in the preparation of the polymer A, such as the percentage content of the epoxy group-containing monomer unit.

-Degree of swelling in electrolyte solution-

The degree of swelling in electrolyte solution of the polymer A is preferably 4 times or more, more preferably more than 4 times, even more preferably 5 times or more, and still even more preferably 7 times or more, and preferably 30 times or less, more preferably 25 times or less, and even more preferably 20 times or less. This is because, when the degree of swelling in electrolyte solution of the polymer A is not less than any of the aforementioned lower limits, the functional layer containing the polymer A can hold a sufficient amount of electrolyte solution in a secondary battery, thereby increasing the ion conductivity inside the secondary battery, and hence allowing the secondary battery to exhibit a more favorable low-temperature output characteristic. Moreover, when the degree of swelling in electrolyte solution of the polymer A is not more than any of the aforementioned upper limits, the polymer A that excessively swells with the electrolyte solution fills the voids in the functional layer, in the functional layer formed from a slurry composition containing the binder composition, which prevents adhesiveness of the functional layer from being reduced in the functional layer, for example. This in turn allows a secondary battery to exhibit a further favorable low-temperature output characteristic.

In the present disclosure, the "degree of swelling in electrolyte solution" of the polymer A can be adjusted, but is not limited to, by any suitable means, e.g., by modifying the types and the amounts of the monomers used in the preparation of the polymer A, such as the percentage content of a hydroxyl group-containing monomer unit.

<Organic solvent>

The boiling point of the organic solvent in the binder composition for non-aqueous secondary battery functional layers is required to be within a certain range. If the organic solvent does not have a boiling point within the aforementioned certain range, it would not be able to dissolve the polymer A sufficiently.

[Boiling point]

Here, the boiling point of the organic solvent needs to be 30°C or higher and 100°C or lower under 1 atm. The boiling point of the organic solvent is preferably 40°C or higher and is preferably 70°C or lower under 1 atm. An organic solvent having a boiling point not less than any of the aforementioned lower limits, for example, facilitates application of a slurry composition including the binder composition on any of substrates, thereby providing excellent handleability. Moreover, an organic solvent having a boiling point not more than any of the aforementioned upper limits can dissolve the polymer A into the binder composition suitably. Additionally, an organic solvent having a boiling point not more than any of the aforementioned upper limits improves the drying property of a slurry composition including the binder composition to be applied on a substrate upon forming a functional layer using the slurry composition, thereby facilitating formation of the functional layer, for example.

[Type]

Examples of the organic solvent whose boiling point is in the above-mentioned specific range include acetone (boiling point under 1 atm of 56°C), tetrahydrofuran (boiling point under 1 atm of 66°C), and methyl ethyl ketone (boiling point under 1 atm of 79.5°C). One of these may be used individually, or two or more of these may be used in combination in an arbitrary ratio.

The organic solvent is preferably a polar solvent from the perspective of increasing the solubility of the polymer components in the binder composition.

<Additive>

The binder composition may further contain an additive, such as a surface tension modifier, a dispersant, a viscosity modifier, a reinforcing material, and an additive for electrolyte solution. These optional components are not limited so long as they do not affect the battery reaction, and may be selected from well-known components, such as those described in WO2012/115096. One of these additives may be used individually, or two or more of these may be used in combination in an arbitrary ratio.

<Method of preparing binder composition>

The binder composition for non-aqueous secondary battery functional layers of the present disclosure can be prepared, by mixing the polymer A and an optional additive used as necessary, in an organic solvent, and there is not specific limitation except that the polymer A containing the aforementioned certain monomer units and the organic solvent having a boiling point within the aforementioned range are used.

The mixing can be achieved with a commonly-used mixing technique. From the perspective of facilitating dissolution of the polymer components in the binder composition, however, it is preferred that a water dispersion in which the polymer A has been polymerized is dried to obtain the polymer A in dried form, which is then stirred and mixed in the organic solvent, for example.

Here, the stirring method is not specifically limited, and a well-known technique may be used. Specifically, the binder composition can be prepared by mixing the aforementioned components in the organic solvent and stirring them with a typical stirring vessel, ball mill, sand mill, bead mill, pigment disperser, ultrasonic disperser, grinding machine, homogenizer, planetary mixer, FILMIX, mix rotor, or the like. Mixing and stirring of the above-described components with the organic solvent may be usually carried out at room temperature (about 23°C to 25°C) for 10 minutes to a few hours.

(Slurry composition for non-aqueous secondary battery functional layer)

A slurry composition for non-aqueous secondary battery functional layers of the present disclosure comprises non-conductive particles and any of the aforementioned binder compositions for non-aqueous secondary battery functional layers. The slurry composition for non-aqueous secondary battery functional layers of the present disclosure may further contain s polymer B different from the polymer A, and an additive, in addition to the above components. Since the slurry composition for non-aqueous secondary battery functional layers of the present disclosure contains at least the non-conductive particles, the polymer A having the aforementioned certain composition, and the organic solvent having a boiling point within the aforementioned range, the polymer A is favorably dissolved also in the slurry composition. In addition, since the slurry composition for non-aqueous secondary battery functional layers of the present disclosure contains the non-conductive particles and the aforementioned binder composition for non-aqueous secondary battery functional layers, the slurry composition enables formation of functional layers capable of providing favorable bonding between battery members (e.g., electrodes and a separator) and allowing a secondary battery to exhibit a favorable low-temperature output characteristic. Further, the slurry composition can also be used to form a functional layer-attached electrode having a functional layer provided on a substrate of an electrode, and a functional layer-attached separator having a functional layer provided on a substrate of a separator.

<Non-conductive particles>

[Type]

The non-conductive particles contained in the slurry composition for non-aqueous secondary battery functional layers of the present disclosure are particles that are non-conductive, and are not dissolved in liquids, such as a dispersion medium in the slurry composition and an electrolyte solution of secondary batteries, such that their particular forms are maintained in the slurry composition and the electrolyte solution. Examples of the non-conductive particles are inorganic particles and organic particles that are present stably in the use environment of non-aqueous secondary batteries and are electrochemically stable. The non-conductive particles can effectively prevent blocking of functional layer-attached battery members during production processes of secondary batteries, for example. In addition, the non-conductive particles can generally provide functional layers made from the slurry composition with heat resistances.

Examples of organic particles as the non-conductive particles include particles of various cross-linked polymers such as polyethylene, polystyrene, polydivinyl benzene, cross-linked styrene-divinyl benzene copolymer, polyimide, polyamide, polyamide imide, melamine resin, phenolic resin, and benzoguanamine-formaldehyde condensate; and particles of heat resistant polymers such as polysulfone, polyacrylonitrile, polyaramid, polyacetal, and thermoplastic polyimide.

Examples of inorganic particles of non-conductive particles that may be used include particles of oxides such as aluminum oxide (alumina), aluminum oxide hydrate (boehmite (AlOOH)), gibbsite (Al(OH)$_3$), silicon oxide, magnesium oxide (magnesia), magnesium hydroxide, calcium oxide, titanium oxide (titania), barium titanate (BaTiO$_3$), ZrO, and alumina-silica composite oxide; particles of nitrides such as aluminum nitride and boron nitride; particles of covalent crystals such as silicon and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, or the like as necessary.

Of these, non-conductive particles are preferably inorganic particles, preferably oxide particles, and even more preferably particles of alumina.

[Particle diameter]

The particle diameter of the non-conductive particles is preferably 0.1 $\mu$m or more and more preferably 0.5 $\mu$m or more, and is preferably 1.5 $\mu$m or less and more preferably 1.0 $\mu$m or less, in terms of the center particle diameter (D50). This is because a particle diameter of the non-conductive particles of not less than any of the aforementioned lower limits can prevent blocking of functional layer-attached battery members (e.g., functional layer-attached electrodes and a functional layer-attached separator) more suitably during production processes of secondary batteries, for example. Moreover, a particle diameter of the non-conductive particles of not more than any of the aforementioned upper limits enables thinning of functional layers made from the slurry composition and allows the functional layers to provide more favorable bonding between battery members (e.g., electrodes and a separator).

In the present disclosure, the "center particle diameter (D50)" can be determined by laser diffraction/scattering using a particle size distribution meter (product name "SALD-2300" manufactured by Shimadzu Corporation).

<Polymer B>

The slurry composition for non-aqueous secondary battery functional layers of the present disclosure preferably contains a polymer B, in addition to the non-conductive particles and the binder composition described above. This is because a slurry composition further containing the polymer B that is a fluorine-containing polymer enables formation of a functional layer capable of further enhancing the low-temperature output characteristic of a secondary battery. In addition, the slurry composition further containing the polymer B that is the fluorine-containing polymer more favorably prevents blocking of functional layer-attached battery members during production processes of secondary batteries, for example, as well as ensuring adhesiveness of the functional layers made from the slurry composition.

[Type]

The polymer B is a polymer that mainly contains a fluorine-containing monomer unit. Specific examples of the polymer B include homopolymers and copolymers of one or more fluorine-containing monomers and copolymers of one or more fluorine-containing monomers with a non-fluorine-containing monomer.

Examples of the polymer B include, but are not limited to, polytetrafluoroethylene, polychlorotrifluoroethylene, polyvinylidene fluoride, polyvinyl fluoride, perfluoroalkoxy fluororesin, tetrafluoroethylene-hexafluoropropylene copolymer, ethylene-tetrafluoroethylene copolymer, ethylene-chlorotrifluoroethylene copolymer, vinylidene fluoride-hexafluoropropylene copolymer.

Of these, the polymer B is preferably polyvinylidene fluoride (PVdF) and vinylidene fluoride-hexafluoropropylene copolymer (PVdF-HFP), and more preferably vinylidene fluoride-hexafluoropropylene copolymer.

In the present disclosure, the percentage content of the fluorine-containing monomer unit in the "polymer B" is usually 70% by mass or more, and preferably 80% by mass or more, more preferably 99% by mass or more, and even more preferably 100 % by mass (it contains only a fluorine-containing monomer unit). In other words, the percentage content of the non-fluorine-containing monomer unit in the "polymer B" is usually 30% by mass or less, and preferably 20% by mass or less, more preferably 1% by mass or less, and even more preferably 0 % by mass (it contains no non-fluorine-containing monomer unit).

[Properties]

--Degree of swelling in electrolyte solution--

The degree of swelling in electrolyte solution of the polymer B is preferably 1 time or more, and is preferably 4 times or less. This is because, when the degree of swelling in electrolyte solution of the polymer B is not more than any of the aforementioned upper limits, a functional layer further including the polymer B can hold an electrolyte solution in a secondary battery in a greater amount, thereby increasing the ion conductivity inside a secondary battery, and allowing the secondary battery to exhibit an even more favorable low-temperature output characteristic. Moreover, when the degree of swelling in electrolyte solution of the polymer B is not more than any of the aforementioned upper limits, the polymer component that excessively swells with the electrolyte solution fills the voids in a functional layer formed using the slurry composition containing the polymer B, which prevents adhesiveness of the functional layer from being reduced in the functional layer, and allowing a secondary battery to exhibit a further favorable low-temperature output characteristic.

In the present disclosure, the degree of swelling in electrolyte solution of the polymer B can be adjusted, but is not limited to, by modifying the type of the polymer B.

Further, in the slurry composition, preferably, the degree of swelling in electrolyte solution of the polymer B is within any of the aforementioned ranges and the degree of swelling in electrolyte solution of the polymer A is also within any of the aforementioned ranges. Moreover, when the slurry composition for non-aqueous secondary battery functional layers further contains a polymer B in addition to the polymer A, the degree of swelling in electrolyte solution of the polymer A is preferably greater than the degree of swelling in electrolyte solution of the polymer B. This allows a secondary battery to exhibit an even further favorable low-temperature output characteristic.

[Content ratio]

When the slurry composition further contains the polymer B, the ratio of the contents of the polymer A and the polymer B in the slurry composition is preferably as follows. Specifically, the content of the polymer A is preferably 1 part by mass or more, more preferably 3 parts by mass or more, and still more preferably 5 part by mass or more, and is preferably 50 parts by mass or less, more preferably 35 parts by mass or less, and still more preferably 20 parts by mass or less in terms of solid content, per 100 parts by mass of the total content of the polymer A and the polymer B. This is because a content of the polymer A relative to the polymer B in the slurry composition of not less than any of the aforementioned lower limits can allow a functional layer made from the slurry composition to provide a more favorable bonding between battery members (e.g., electrodes and a separator). Moreover, a content of the polymer A relative to the polymer B in the slurry composition of not more than any of the aforementioned upper limits can further prevent blocking of functional layer-attached battery members made from the slurry composition, as well as enabling the functional layers to further enhance the low-temperature output characteristic of a secondary battery.

<Additive>

Examples of the additive that can be contained in the slurry composition include, but are not limited to, additives similar to those described above in the section of "Binder composition for non-aqueous secondary battery functional layers".

<Method of preparing slurry composition>

No specific limitations are placed on the slurry composition for non-aqueous secondary battery functional layers of the present disclosure, except that the non-conductive particles and the certain binder composition described above are used. The slurry composition can be prepared by mixing these components, and optionally a polymer B and an additive as necessary, in a dispersion medium, to thereby cause the components dispersed in the dispersion medium.

As the dispersion medium, preferably, the liquid (e.g., organic solvent) contained in the binder composition, and/or the same solvent as the organic solvent contained in the binder composition are used.

No specific limitations are placed on the order to mix the above-described components. Yet, when the polymer B is used in preparation of the slurry composition, it is preferable to prepare a polymer solution in advance in which the binder compositions and the polymer B are mixed together, from the perspectives of ensuring favorable dissolution of the polymer components in the slurry composition and ensuring suitable dispersion of non-conductive particles. Further, the polymer components, such as the polymer A and the polymer B, are preferably dissolved favorably in the polymer solution. The slurry composition can be prepared favorably by mixing the resultant polymer solution and non-conductive particles to thereby cause the non-conductive particles to be dispersed.

[Content of components other than non-conductive particles]

In the slurry composition, the content of component(s) other than the non-conductive particles (the polymer A, and a polymer B and an arbitrary additives as necessary) is preferably 1 part by mass or more, more preferably 10 parts by mass or more, still more preferably 20 part by mass or more, and preferably 100 parts by mass or less, more preferably 75 parts by mass or less, and still more preferably 40 parts by mass in terms of solid content, relative to 100 parts by mass of the non-conductive particles. This is because a content of the component(s) other than the non-conductive particles of not less than any of the aforementioned lower limits can allow a functional layer made from the slurry composition to provide favorable bonding between battery members (e.g., electrodes and a separator). Moreover, a content of the component(s) other than the non-conductive particles of not more than any of the aforementioned upper limits can more effectively prevent blocking of functional layer-attached battery members.

The "other component(s)" correspond to the "polymer solution" when a polymer solution in which the binder composition, and the polymer B and an arbitrary additive, as necessary, are mixed and dissolved, is prepared in advance, and a slurry composition is prepared by mixing the polymer solution with non-conductive particles to hereby cause the non-conductive particles to be dispersed, . Accordingly, when the slurry composition is prepared using this polymer solution, the "content of other component(s) in terms of solid content" can be regarded as the "content of the polymer solution in terms of solid content", and the preferred ranges thereof are also the same as the those of the other content(s).

[Dispersion method]

Although No specific limitations are placed on the dispersion method of these components, the mixing is preferably carried out using a disperser as a mixing apparatus in order to achieve efficient dispersion of the components. The disperser is preferably a apparatus that can provide homogeneous dispersion and mixing of the components. Examples of the disperser include a media-less disperser, a bead mill, a ball mill, a sand mill, a pigment disperser, a grinding machine, an ultrasonic disperser, a homogenizer, and a planetary mixer.

Mixing of the above-described components may be performed at room temperature (about 23°C to 25°C) for 10 minutes to 24 hours, for example.

The dispersers can cause non-conductive particles in the slurry composition to be favorably dispersed in the solvent, and also can cause the polymer A in the slurry composition to be favorably dissolved in the solvent.

(Non-aqueous secondary battery functional layer)

The non-aqueous secondary battery functional layer of the present disclosure is formed from any of the aforementioned slurry compositions for non-aqueous secondary battery functional layers . The non-aqueous secondary battery functional layer of the present disclosure can be formed, for example, by applying the above-described slurry composition onto the surface of a suitable substrate to form a slurry film, and then drying the resultant slurry film. In other words, the non-aqueous secondary battery functional layer of the present disclosure is formed from a dried product of the aforementioned slurry composition for non-aqueous secondary battery functional layers, and it contains at least the certain polymer A and the non-conductive particles, and optionally a polymer B and an additive.

Since the non-aqueous secondary battery functional layer of the present disclosure is made from the aforementioned slurry composition, it can provide favorable bonding between battery members (e.g., electrodes and a separator) during production processes of secondary batteries, for example. Moreover, since the non-aqueous secondary battery functional layer of the present disclosure is made from the aforementioned slurry composition, it enables a secondary battery to exhibit a favorable low-temperature output characteristic.

Preferably, the non-aqueous secondary battery functional layer of the present disclosure is a porous layer having a porous structure. In addition, the non-aqueous secondary battery functional layer of the present disclosure has heat resistance in addition to the adhesiveness, and thus can function as a heat resistant layer formed on a substrate of a battery member (e.g., an electrode or a separator) for protecting the battery member from heat.

<Substrate>

No specific limitations are placed on the substrate onto which the slurry composition is applied. For example, a slurry film of the slurry composition may be formed on a surface of a detachable substrate and the slurry film may be dried to form a functional layer, such that the detachable substrate may be peeled from the functional layer. The functional layer peelable from the detachable substrate in this manner can be used as an independent film in formation of a battery member of a secondary battery. Specifically, the functional layer that is peeled from the detachable substrate may be laminated on a separator to form a functional layer-attached separator, or may be laminated on an electrode to form a functional layer-attached electrode.

However, the substrate is preferably a separator substrate or an electrode substrate, and is more preferably a separator substrate from a perspective of increasing the production efficiency of battery members since the step of peeling the functional layer can be omitted.

[Separator substrate]

No specific limitations are placed on the separator substrate, and examples thereof include known separator substrates such as organic separator substrates. The organic separator substrate is a porous member contituted from an organic material and examples thereof include porous resin films and non-woven fabric containing a polyolefin resin such as polyethylene or polypropylene, an aromatic polyamide resin, or the like. Of these, separator substrates are preferably porous resin films, more preferably porous polyolefin resin films, and even more preferably porous polyethylene films, for their excellent strengths.

A separator substrate having one or more functional layers formed on one or both surfaces thereof can be used as a functional layer-attached separator in a method of producing a non-aqueous secondary battery.

The thickness of the separator substrate may be set to an arbitrary thickness, and is preferably 3 $\mu$m or more, and more preferably 5 $\mu$m or more, and preferably 30 $\mu$m or less, and is more preferably 20 $\mu$m or less. This is because a separator substrate having a thickness of not less than any of the aforementioned lower limits can provide sufficient strength. Moreover, a separator substrate having a thickness of not more than any of the aforementioned upper limits can prevent the ion conductivity in a secondary battery from being reduced and can increase the low-temperature output characteristic of the secondary battery.

[Electrode substrate]

No specific limitations are placed on the electrode substrates (positive electrode substrate and negative electrode substrate). Examples thereof include an electrode substrate in which an electrode mixed material layer is formed on a current collector.

The following describes an example where the non-aqueous secondary battery functional layer is a functional layer for a lithium ion secondary battery, although the present disclosure is not limited to the following example.

The current collector, an electrode active material (positive/negative electrode active material) contained in an electrode mixed material layer, and a binder for electrode mixed material layers (binder for positive/negative electrode mixed material layer), and the method by which the electrode mixed material layer is formed on the current collector may be one of commonly known techniques, such as that described in JP 2013-145763 A, for example.

<Method of Forming Functional Layer>

Examples of the method of forming a functional layer on a substrate, such as the separator substrate or the electrode substrate, set forth above include:

1) a method in which the slurry composition for non-aqueous secondary battery functional layers of the present disclosure is applied onto the surface of a separator substrate or an electrode substrate (surface on the electrode mixed material layer side in the case of electrode substrate; same applies below) and is then dried;
2) a method in which a separator substrate or an electrode substrate is immersed in the slurry composition for non-aqueous secondary battery functional layers of the present disclosure and subsequently dried; and
3) a method in which the slurry composition for non-aqueous secondary battery functional layers of the present disclosure is applied onto a detachable substrate, and is dried to produce a functional layer, which is transferred onto a separator substrate or an electrode substrate.

Of these, when functional layers are to be formed on the both surfaces of the substrate, for example, the method 2) is particularly preferred since it enables application of the slurry composition on the both surfaces of the substrate. Or, when a functional layer is to be formed on one surface of the substrate, for example, the method 1) is particularly preferred since it enables application of the slurry composition only on one surface of the substrate. More specifically, the method 1) includes the steps of applying the slurry composition on a surface of a substrate (application step), and drying the slurry composition provided by the application on the surface of the substrate to form a functional layer (functional layer formation step). Or, more specifically, the method 2) includes the steps of immersing a substrate in the slurry composition (immersion step), and drying the slurry composition provided by the immersion on the surface(s) of the substrate to form a functional layer(s) (functional layer formation step).

[Application step]

Examples of methods by which the composition for functional layers can be applied onto the substrate in the application step include, but are not limited to, doctor blading, reverse roll coating, direct roll coating, gravure coating, extrusion coating, brush coating, and wire bar coating.

[Immersion step]

In the immersion step, a substrate can be immersed in the slurry composition in any suitable method such that the surface(s) on which a functional layer(s) are to be formed, come into close contact with the slurry composition.

Here, the immersion temperature can be under an environment of room temperature (about 23°C to 25°C), for example. In addition, the immersion time and the pulling-up speed can be adjusted as appropriate according to the desired thickness of the functional layer(s).

In the immersion step, from the perspectives of ease of handling and provision of strong bonding between battery members, preferably the both surfaces of a substrate are immersed in the slurry composition, and more preferably the both surfaces of a separator substrate are immersed in the slurry composition.

[Functional layer formation step]

The method of drying the slurry composition provided on the substrate by the application or immersion step in the functional layer formation step is not specifically limited and a commonly known method may be used. Examples of the drying method include leaving the functional layer to dry; drying by warm, hot, or low-humidity air; drying in a vacuum; and drying by irradiation with infrared light, an electron beam, or the like. Although No specific limitations are placed on the drying conditions, the drying temperature is preferably an environment of room temperature (about 23°C to 25°C) to 50°C, and the drying time is preferably from 30 seconds to 30 minutes.

Preferably, functional layers are formed on the both surfaces of a substrate, and more preferably functional layers are formed on the both surfaces of a separator substrate, from a perspective of providing strong bonding between battery members.

<Thickness of functional layer>

The thickness of the non-aqueous secondary battery functional layer of the present disclosure is preferably 0.5 $\mu$m or more, and more preferably 2 $\mu$m or more, and is preferably 10 $\mu$m or less, and more preferably 6 $\mu$m or less, per one surface. This is because a functional layer having a thickness of not less than any of the aforementioned lower limits can allow a functional layer to provide a more favorable bonding between battery members (e.g., electrodes and a separator) to each other. In addition, a functional layer having a thickness of not more than any of the aforementioned upper limits can more effectively prevent blocking of functional layer-attached battery members and further increase the low-temperature output characteristic of a secondary battery, for example.

(Functional layer-attached separator for non-aqueous secondary battery)

The functional layer attached-separator for a non-aqueous secondary battery of the present disclosure comprises a separator substrate, and the aforementioned non-aqueous secondary battery functional layer formed on at least one surface of the separator substrate. Since the functional layer attached-separator for a non-aqueous secondary battery of the present disclosure comprises the aforementioned non-aqueous secondary battery functional layer formed on a surface(s) of a separator substrate, it can suitably adhere to a battery member (e.g., an electrode) during production processes of a non-aqueous secondary battery, for example. In addition, the functional layer attached-separator for a non-aqueous secondary battery of the present disclosure comprising the aforementioned non-aqueous secondary battery functional layer formed on the surface(s) of the separator substrate can allow a secondary battery to exhibit a favorable low-temperature output characteristic.

Upon bonding the functional layer attached-separator for a non-aqueous secondary battery of the present disclosure to an electrode, usually, the electrode mixed material layer side of the electrode is brought to contact with the functional layer side of the non-aqueous secondary battery functional layer to thereby bond them together firmly by preferably pressing and/or heating the contact portion.

Here, examples of the separator substrate provided in the functional layer attached-separator for a non-aqueous secondary battery of the present disclosure may include separator substrates similar to the ones described in the section of "Non-aqueous secondary battery functional layer", and the preferred type and properties thereof may be the same. Of these, a separator substrate provided in a functional layer-attached separator is preferably a porous resin film substrate, more preferably a porous polyolefin resin substrate, and even more preferably a porous polyethylene film substrate, for their excellent strengths.

In addition, the functional layer provided in the functional layer attached-separator for a non-aqueous secondary battery of the present disclosure may be a porous layer, similarly to the aforementioned "non-aqueous secondary battery functional layer". Accordingly, the functional layer attached-separator for a non-aqueous secondary battery of the present disclosure is preferably porous as a whole. This is because a separator substrate being porous as a whole can ensure high conductivity in a secondary battery, and can ensure the low-temperature output characteristic of the secondary battery.

<Formation method>

The method of forming a functional layer attached-separator for a non-aqueous secondary battery may be carried out in the manner similar to the method of forming a functional layer described above in the section of the "Non-aqueous secondary battery functional layer". Of these, for the method of forming a functional layer attached-separator for a non-aqueous secondary battery the method 2) is particularly preferred since it facilitates simplified formation of a functional layer on a surface of the separator substrate, particularly functional layers on the both surfaces of the separator substrate.

The functional layer attached-separator for a non-aqueous secondary battery preferably has functional layers formed on the both surfaces of the separator substrate.

(Non-aqueous secondary battery)

A non-aqueous secondary battery of the present disclosure comprises a positive electrode, a negative electrode, a separator, and the aforementioned non-aqueous secondary battery functional layer(s) between at least one of the positive electrode and negative electrode and the separator. In other words, in the non-aqueous secondary battery of the present disclosure, a functional layer may be provided only between the positive electrode and the separator, or between the negative electrode and the separator, or respective functional layers may be provided both the positive electrode and the separator and between the negative electrode and the separator. Of these, it is preferred that respective functional layers are provided both between the positive electrode and the separator and between the negative electrode and the separator.

Here, the functional layer may be provided as a functional layer constituting a functional layer-attached electrode (functional layer-attached positive electrode and/or functional layer-attached negative electrode), or a functional layer constituting a functional layer-attached separator, or a functional layer may be provided as an independent film as set forth above.

More specifically, the non-aqueous secondary battery of the present disclosure may comprise a battery member laminate constituted from a combination of (positive electrode/functional layer/separator) and/or a combination of (negative electrode/functional layer/separator); may comprise a battery member laminate constituted from a combination of (separator/functional layer-attached positive electrode) and/or a combination of (separator/functional layer-attached negative electrode); or may comprise a battery member laminate constituted from a combination of (positive electrode/functional layer-attached separator) and/or a combination of (negative electrode/functional layer-attached separator). Of these, the non-aqueous secondary battery of the present disclosure preferably comprises a battery member laminate constituted from at least one of a combination of (positive electrode/functional layer-attached separator) and a combination of (negative electrode/functional layer-attached separator), and more preferably a battery member laminate constituted from a combination of (positive electrode/functional layer-attached separator having functional layers on both sides/negative electrode), from the perspective of providing stronger bonding between battery members.

The non-aqueous secondary battery of the present disclosure generally has a structure in which a battery member laminate configured from battery members, including a positive electrode, a negative electrode, a separator, and a functional layer(s), which are laminated as described above, and an electrolyte solution, sealed in any of casings. Since the non-aqueous secondary battery of the present disclosure has the aforementioned non-aqueous secondary battery functional layer(s) at a certain location(s), it can exhibit a favorable low-temperature output characteristic.

<Positive electrode, negative electrode, and separator>

The positive electrode, the negative electrode, and the separator provided in the non-aqueous secondary battery of the present disclosure may be, but are not limited to, similar to electrodes (positive electrode and negative electrode) made from electrode substrates and a separator made from a separator substrate described in the section of "Non-aqueous secondary battery functional layer".

The methods of providing a functional layer(s) to a positive electrode, a negative electrode, and/or separator may be carried out in the manner similar to the method of forming a functional layer described in the section of "Non-aqueous secondary battery functional layer".

<Electrolyte Solution>

The electrolyte solution is typically an organic electrolyte solution obtained by dissolving a supporting electrolyte in an organic solvent. The supporting electrolyte may, for example, be a lithium salt in the case of a lithium ion secondary battery. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these, $LiPF_6$, $LiClO_4$, and $CF_3SO_3Li$ are preferable as they readily dissolve in solvents and exhibit a high degree of dissociation. Note that one electrolyte may be used individually or two or more electrolytes may be used in combination. In general, the lithium ion conductivity tends to increase when a supporting electrolyte having a high degree of dissociation is used. Therefore, the lithium ion conductivity can be adjusted through the type of supporting electrolyte that is used.

No specific limitations are placed on the organic solvent used in the electrolyte solution other than being an organic solvent in which the supporting electrolyte can dissolve. Examples of appropriate organic solvents that can be used in lithium ion secondary batteries include carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixed liquid of such organic solvents may be used. Of these solvents, carbonates are preferable due to having high permittivity and a wide stable potential region. Normally, as the viscosity of the solvent being used is lower, the lithium ion conductivity tends to increase. Hence, the lithium ion conductivity can be adjusted by the type of solvent.

The concentration of the electrolyte in the electrolyte solution can be adjusted as appropriate. Furthermore, known additives may be added to the electrolyte solution.

<Production of secondary battery>

The non-aqueous secondary battery of the present disclosure can be, but is not limited to, produced in accordance with a method of producing a non-aqueous secondary battery of the present disclosure described below, for example.

(Method of producing non-aqueous secondary battery)

A method of producing a non-aqueous secondary battery of the present disclosure is a method of producing the above-described non-aqueous secondary battery of the present disclosure, and comprises the step of bonding between at least one of the positive electrode or the negative electrode and the separator, by the non-aqueous secondary battery functional layer. The method of producing a non-aqueous secondary battery of the present disclosure may also comprise the step of providing a functional layer-attached separator and/or the step of providing a functional layer-attached electrode, prior to the step of bonding, for example. In general, the method of producing a non-aqueous secondary battery of the present disclosure also comprises the step of assembling the secondary battery after the step of bonding.

Since the method of producing a non-aqueous secondary battery of the present disclosure comprises the step of bonding between at least one of the positive electrode or the negative electrode and the separator, by the non-aqueous secondary battery functional layer, it can provide a secondary battery having a favorable low-temperature output characteristic.

<Step of providing functional layer-attached separator>

The step of providing a functional layer-attached separator that may be included in the production method of the present disclosure provides a functional layer-attached separator by forming the aforementioned non-aqueous secondary battery functional layer on a surface of a separator substrate. Examples of the separator substrate include those similar to the separator substrates described in the section of "Non-aqueous secondary battery functional layer", and the methods of forming a non-aqueous secondary battery functional layer may be carried out in the manner similar to the method of forming a functional layer described in the section of the "Non-aqueous secondary battery functional layer". Of these, the method 2) described above is preferred. From the perspectives of the work efficiency and providing a favorable bonding between battery members (e.g., electrodes and a separator), the functional layer-attached separator preferably has functional layers formed on the both surfaces of the separator substrate.

When a functional layer-attached separator is used in the method of producing a non-aqueous secondary battery of the present disclosure, the electrodes are generally a positive electrode and a negative electrode without a functional layer.

<Step of providing functional layer-attached electrode>

In the step of providing a functional layer-attached electrode, a functional layer-attached electrode is provided by forming the aforementioned non-aqueous secondary battery functional layer on a surface of an electrode substrate. Examples of the electrode substrate include those similar to the electrode substrates described in the section of "Non-aqueous secondary battery functional layer", and the methods of forming a non-aqueous secondary battery functional layer may be carried out in the manner similar to the method of forming a functional layer described in the section of the "Non-aqueous secondary battery functional layer". Of these, the method 1) described above is preferred.

From the perspective of providing a favorable bonding between battery members (e.g., electrodes and a separator), when the functional layer-attached electrode(s) is used, both a functional layer-attached positive electrode and a functional layer-attached negative electrode are preferably formed. When a functional layer-attached positive electrode and a functional layer-attached negative electrode are used in the method of producing a non-aqueous secondary battery of the present disclosure, the separator is usually a separator without a functional layer.

<Bonding step>

In the bonding step, at least one of a positive electrode and a negative electrode are bonded with a separator via a non-aqueous secondary battery functional layer described above interposed therebetween. Therefore, in the bonding step, only a positive electrode and a separator may be bonded together interposing a functional layer, only a negative electrode and a separator may be bonded together interposing a functional layer, or a positive electrode and a separator, and a negative electrode and the separator may be bonded together interposing respective functional layers. Of these, a positive electrode and a separator, and a negative electrode and the separator are preferably bonded together interposing respective functional layers.

Here, the interposed functional layer may be a functional layer included in a functional layer-attached electrode (functional layer-attached positive electrode and/or functional layer-attached negative electrode), or a functional layer included in a functional layer-attached separator, or the interposed functional layer may be an independent film.

In the step of bonding, for example, a battery member laminate as described above in the section of "Non-aqueous secondary battery" can be provided. Of these, the bonding step includes providing a battery member laminate constituted from at least one of a combination of (positive electrode/functional layer-attached separator) and a combination of (negative electrode/functional layer-attached separator), and more preferably providing a battery member laminate constituted from a combination of (positive electrode/functional layer-attached separator having functional layers on both sides/negative electrode), from the perspective of providing stronger bonding between battery members.

[Bonding method]

The bonding may be achieved solely by providing each battery member laminate described above. Yet, the resultant battery member laminate preferably undergoes pressing and/or heating, more preferably undergoes at least pressing, and even more preferably undergoes pressing and heating. Pressing and heating may be carried out simultaneously, or pressing may be carried out after heating. Yet, from the perspectives of the work efficiency and providing a favorable bonding between battery members, the pressing and the heating are preferably carried out simultaneously.

--Pressing method--

When pressing is carried out in the bonding step, the pressing is achieved by a well-known press machine, such as a flat plate press or a roll press, at 1 MPa or more and 10 MPa or less, for 1 second or longer and 3 minutes or shorter.

--Heating method--

When heating is carried out in the bonding step, the heating is achieved by placing the battery member laminate under an environment of 40°C or higher and 150°C or lower using a well-known heater, or by heating by means of a press plate of the press machine heated at 40°C or higher and 150°C or lower, for example.

<Assembling step>

The step of assembling a secondary battery that may be included in the method of producing a non-aqueous secondary battery of the present disclosure may include enclosing the battery member laminate provided in above-described bonding step, which is wrapped or folded as necessary, for example, in a casing, filling the casing with an electrolyte solution, and then sealing the casing, for example. In order to prevent pressure increase inside the battery and occurrence of overcharging or overdischarging, an expanded metal; an overcurrent preventing device such as a fuse or a PTC device; or a lead plate may be provided in the casing as necessary. The shape of the battery may be a coin type, button type, sheet type, cylinder type, prismatic type, flat type, or the like, for example.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of monomers, the proportion constituted by a monomer unit in the polymer that is formed through polymerization of a given monomer is usually, unless otherwise specified, the same as the ratio (charging ratio) of the given monomer among all monomers used in polymerization of the polymer.

The following procedures were used in Examples and Comparative Examples to measure and evaluate the proportion of THF insoluble component of a polymer A, the degrees of swelling in electrolyte solution of the polymer A and a polymer B, the solubility of polymer components in a binder composition, the stability of a slurry composition, the blocking resistance and the adhesiveness of a functional layer-attached battery member, and the low-temperature output characteristic of a secondary battery.

<Proportion of THF insoluble component>

The proportion of THF insoluble component of each polymer A was calculated as follows. More specifically, each obtained polymer A was dissolved in an organic solvent to obtain an solution of the polymer A, which was dried under an environment at an absolute humidity of 50% and at a temperature of 23°C to 25°C to produce a film having a thickness of 3±0.3 mm. The produced film was cut into 5-mm square film pieces, and 1 g of these film pieces was precisely weighed out. The weight of the precisely weighed film pieces was recorded as W0.
The weighed film pieces were immersed in 100 g of tetrahydrofuran (THF) for 24 hours under an environment at a temperature of 25°C. The residual film pieces withdrawn from THF were subjected to vacuum drying for 3 hours under an environment at a temperature of 105°C and the vacuum dried film pieces were precisely weighed. The weight of the precisely weighed film pieces, in other words, the weight of the polymer A not dissolved in THF, was recorded as W1.
The proportion (%) of THF insoluble component of the polymer A was calculated according to the following equation:

$$\text{Proportion of THF insoluble component (\%)} = (W1/W0) \times 100$$

A greater value of proportion of THF insoluble component indicated that the polymer A is less soluble in THF. Organic solvents used were methyl ethyl ketone (MEK), N-methyl-2-pyrrolidone (NMP), and acetone in Example 10, Comparative Examples 5-8, and other Examples and Comparative Examples, respectively.

<Degree of swelling in electrolyte solution>

The degrees of swelling in electrolyte solution of each polymer A and each polymer B were measured by the following method.
More specifically, each of solutions of the polymer A and the polymer B in which the polymer A and the polymer B were dissolved in respective organic solvents was poured into a polytetrafluoroethylene petri dish and dried for 48 hours at a temperature of 25°C to obtain respective powder of the two polymers. Approximately 0.2 g of each resultant powder was pressed for 2 minutes at a temperature of 200°C and under a pressure of 5 MPa to obtain a test sample of each of the two polymers. The weight of each test sample was measured and was taken to be W0.
Each test sample was immersed in an electrolyte solution at a temperature of 60°C for 72 hours. Thereafter, each test sample was removed from the electrolyte solution, the electrolyte solution on the surface of the test sample was wiped off, and the weight W1 of the test sample after the immersion was measured.
Then the respective degrees of swelling in electrolyte solution of the polymer A and the polymer B were calculated according to the following equation:

$$\text{Degree of swelling in electrolyte solution (times)} = W1 / W0$$

The electrolyte solution was prepared by dissolving $LiPF_6$ as a supporting electrolyte at a concentration of 1 mol/L into a mixture solvent of ethylene carbonate (EC), diethyl carbonate (DEC), and vinylene carbonate (VC) (mixing ratio by volume: EC/DEC/VC = 68.5/30/1.5). Organic solvents used were methyl ethyl ketone (MEK), N-methyl-2-pyrrolidone (NMP), and acetone in Example 10, Comparative Examples 5-8, and other Examples and Comparative Examples, respectively.

<Solubility of polymer components>

The solubility of the polymer components in each binder composition into an organic solvent was evaluated as follows.
More specifically, a water dispersion of each obtained polymer A was dried under an environment at an absolute humidity of 50% and at a temperature of 23°C to 25°C to prepare a film of the polymer A having a thickness of 3±0.3 mm. Subsequently, the obtained film of the polymer A was cut into 5-mm square film pieces. Subsequently, 72 g of an organic solvent and 8 g of the cut film pieces as the polymer component (polymer A) in the binder composition were placed into a 100 ml glass bottle, and were mixed together by a mix rotor (rotational speed: 100 rpm) to thereby cause the polymer A to be dissolved in the organic solvent. The time (dissolution time) until the polymer A was dissolved into the organic solvent, in other words, the time until the insoluble part of the polymer A dissolved to become no longer visible in the organic solvent, was measured to evaluate the solubility of the polymer components in the binder composition. A shorter dissolution time indicated that the polymer A more readily dissolved in the organic solvent, indicative of an excellent solubility of the polymer component in the binder composition.

Organic solvents used were methyl ethyl ketone (MEK), N-methyl-2-pyrrolidone (NMP), and acetone in Example 10, Comparative Examples 5-8, and other Examples and Comparative Examples, respectively.

A: The dissolution time was shorter than 1 hour
B: The dissolution time was 1 hour or longer and shorter than 3 hours
C: The dissolution time was 3 hours or longer

<Stability of slurry composition>

The stability of each slurry composition was evaluated as follows.

More specifically, each obtained slurry composition was placed in a 100 ml glass bottle and was left to stand at room temperature (25°C). The time (separation time) until the border of the supernatant began to be visible in the vicinity of the upper surface after the bottle was left to stand was measured to evaluate the stability of the slurry composition. A longer dissolution time indicated that the components were evenly dispersed in the slurry composition, indicative of an excellent stability.

A: The separation time was 2 hours or longer
B: The separation time was 30 minutes or longer and shorter than 2 hours
C: The separation time was shorter than 30 minutes

<Blocking Resistance>

The blocking resistance of each functional layer-attached battery member was evaluated as follows.

More specifically, a functional layer-attached separator having a functional layer on one side was cut into two square pieces, each having a width of 5 cm and a length of 5 cm. Then the two square pieces were overlapped one another such that the functional layers faced to each other, and the two pieces were pressurized at 10 g/cm$^2$ at a temperature of 40°C for 24 hours to prepare a test sample (pressed test sample). The two overlapped square pieces in each pressed test sample were visually observed to determine whether they were adhered to each other or not, to thereby evaluate the blocking resistance of the functional layers according to the following criteria: When the two overlapped square pieces were adhered together, one of the square pieces was drawn with a force of 0.3 N/m while the other piece was affixed, to determine whether or not they could be peeled apart from each other. A weaker adhesion of the two overlapped square pieces indicated a higher blocking resistance of the functional layer.

A: The two square pieces were not adhered together.
B: The two square pieces were adhered together but could be peeled apart.
C: The two square pieces were adhered together and could not be peeled apart.

<Adhesiveness>

The adhesiveness of each functional layer-attached battery member was evaluated as follows.

«Examples 1 to 15 and Comparative Examples 1 to 8»

More specifically, each functional layer-attached separator provided with a functional layer only on one side was cut out into a strip of 10 mm in width × 50 mm in length. A positive electrode piece and the piece of the functional layer-attached separator were laminated such that the positive-electrode mixed material layer side and the functional layer side faced with each other, and were pressed with a flat plate press under a pressure of 5 Mpa at a temperature of 70°C for 10 seconds to thereby yield a test sample. The resultant test sample was placed with the surface on the current collector side of the positive electrode facing downward and cellophane tape was attached to the surface on the current collector side of the positive electrode. Tape prescribed by JIS Z1522 was used as the cellophane tape. The cellophane tape was affixed to a horizontal test bed. Next, one end of the separator was pulled vertically upward at a pulling speed of 50 mm/minute to peel off the separator, and the stress during this peeling was measured. The measurement was made 3 times. An average of measured stress values was recorded as peel strength (N/m) which was evaluated based on the criteria given below to evaluate the adhesiveness of the functional layer. A larger peel strength indicated better adhesion between the positive electrode and the separator having the functional layer interposed therebetween, and a higher adhesiveness of battery members via the functional layer.

A: Peel strength was 25 N/m or more
B: Peel strength was 10 N/m or more and less than 25 N/m
C: Peel strength was less than 10 N/m

<<Example 16>>

A functional layer-attached negative electrode provided with a functional layer only on one side was cut out into a strip of 10 mm in width × 50 mm in length. A separator and the piece of the functional layer-attached negative electrode were laminated such that the separator and the functional layer side faced with each other, and were pressed with a flat plate press under a pressure of 5 Mpa at a temperature of 70°C for 10 seconds to thereby yield a test sample. The resultant test sample was placed with the surface on the current collector side of the negative electrode facing downward and cellophane tape was attached to the surface on the current collector side of the negative electrode. Tape prescribed by JIS Z1522 was used as the cellophane tape. The cellophane tape was affixed to a horizontal test bed. Next, one end of the separator was pulled vertically upward at a pulling speed of 50 mm/minute to peel off the separator, and the stress during this peeling was measured. The measurement was made 3 times. An average of measured stress values was recorded as peel strength (N/m) which was evaluated based on the criteria given below to evaluate the adhesiveness of the functional layer. A larger peel strength indicated better adhesion between the negative electrode and the separator having a functional layer interposed therebetween, and a higher adhesiveness of battery members via the functional layer.

A: Peel strength was 25 N/m or more
B: Peel strength was 10 N/m or more and less than 25 N/m
C: Peel strength was less than 10 N/m

<Low-temperature output characteristic>

The low-temperature output characteristic of each secondary battery was evaluated as follows.

More specifically, each produced lithium ion secondary battery in a laminated type (single-layered laminate type) having a capacity of 40 mAh was left for 24 hours under an environment at a temperature of 25°C. Thereafter, the secondary battery was charged for 5 hours at a charge rate of 0.1 C and under an environment of a temperature of 25°C, and the voltage V0 after the charge was measured. Thereafter, the secondary battery was discharged at a discharge rate of 1 C under an environment at a temperature of -10°C, and the voltage V1 at 15 seconds after the start of discharge was measured. The voltage change $\Delta V$ (mV) of the secondary battery was then calculated according to the following formula:

$$\text{The voltage change } \Delta V \text{ (mV)} = V0 - V1$$

The low-temperature output characteristic of the secondary battery was evaluated from the determined $\Delta V$ based on the criteria below. A smaller voltage change $\Delta V$ indicated better secondary battery low-temperature output characteristic.

A: Voltage change $\Delta V$ was less than 350 mV
B: Voltage change $\Delta V$ was 350 mV or more and less than 500 mV
C: Voltage change $\Delta V$ was 500 mV or more

(Example 1)

<Preparation of polymer A>

The following were placed in an autoclave equipped with a stirrer and thoroughly stirred: 164 parts of deionized water, 15 parts of acrylonitrile (AN) as a (meth)acrylonitrile monomer, 75 parts of ethyl acrylate (EA) as a (meth)acrylic acid ester monomer, 5 parts of allyl glycidyl ether (AGE) as an epoxy group-containing monomer as an additional monomer, 5 parts of β-hydroxyethyl acrylate (β-HEA) as a hydroxyl group-containing monomer as an additional monomer, 0.3 parts of potassium persulfate as a polymerization initiator, and 1.2 parts of sodium polyoxyethylene alkyl ether sulfate as an emulsifier. The mixture was then polymerized by heating at 80°C for 5 hours to yield a water dispersion of a polymer A.

The solid content concentration of the water dispersion of the resultant polymer A was 37.3%, and the polymerization conversion rate determined by the solid content concentration was 96%.

Then, the proportion of THF insoluble component and the degree of swelling in electrolyte solution of the resultant polymer A were calculated and evaluated according to the above-described procedures. The results are listed in Table 1.

<Preparation of binder composition>

The water dispersion of the resultant polymer A was dried under an environment at an absolute humidity of 50% and at a temperature of 23°C to 25°C to prepare a film of the polymer A having a thickness of $3\pm0.3$ mm. Subsequently, the obtained film of the polymer A was cut into 5-mm square film pieces. Subsequently, the cut film pieces were placed into a glass bottle together with acetone (boiling point under 1 atm: 56°C) as an organic solvent such that the solid content concentration became 10% by mass, and was mixed by a mix rotor (rotational speed: 100 rpm). The mixing was carried out until the polymer A (polymer component in the binder composition) was dissolved into the organic solvent, in other words, until the insoluble part of the polymer A dissolved to become no longer visible in the organic solvent, to thereby obtain a binder composition for non-aqueous secondary battery functional layers.

The solubility of the polymer components of the resultant binder composition was evaluated according the procedure described above. The results are listed in Table 1.

<Preparation of slurry composition for functional layers>

A polymer solution containing the polymer A and a polymer B was prepared in advance by blending 12.5 parts of the resultant binder composition in terms of solid (polymer A) content and 87.5 parts of vinylidene fluoride-hexafluoropropylene copolymer (PvdF-HFP, the ratio of HFP is 5% by mass) as the polymer B in terms of solid content and mixing them together.

Next, 100 parts of alumina (product name of "AKP3000" manufactured by Sumitomo Chemical Co., Ltd., center particle diameter (D50): 0.7 $\mu$m) as non-conductive particles, 26 parts of the polymer solution obtained as above in terms of solid content, and 714 parts of acetone as a dispersion medium were placed into a bead mill, and were subjected to a dispersion treatment for 2 hours, to obtain a slurry composition for non-aqueous secondary battery functional layers with a solid content concentration of 15%. The stability of the resultant slurry composition for functional layers was evaluated according the procedure described above.

The degree of swelling in electrolyte solution of the polymer B was calculated in accordance with the above-described procedure. The results are listed in Table 1.

<Formation of functional layer-attached separator>

A separator (made of polyethylene, with a thickness of 12 $\mu$m) substrate was immersed in the slurry composition for functional layers as obtained above for 5 seconds under an environment at a temperature of 25°C, and was then pulled out of the slurry composition for functional layers. This provided the both surfaces of the separator substrate with the slurry composition. The provided slurry composition was dried at a temperature of 25°C for 3 minutes, to thereby obtain a functional layer-attached separator having non-aqueous secondary battery functional layers formed on the both surfaces, and having a thickness of 4 $\mu$m on each surface. The functional layer-attached separator having functional layers on the both surfaces was used for the production of a secondary battery described above.

In addition, on an arbitrary one surface of another separator (made of polyethylene, with a thickness of 12 $\mu$m) substrate, the slurry composition for functional layers obtained described above was applied by a wire bar, and was then dried at a temperature of 25°C for 3 minutes to obtain a functional layer-attached separator having a functional layer in a thickness of 4 $\mu$m on one surface.

The functional layer-attached separator having the functional layer on the one surface was used for the evaluations of the blocking resistance and the adhesiveness of the functional layer according to the procedures described above. The results are listed in Table 1.

<Production of positive electrode>

A slurry composition for positive electrodes was obtained by mixing 100 parts of $LiCoO_2$ (volume average particle diameter D50: 12 $\mu$m) as a positive electrode active material, 2 parts of acetylene black (product name "HS-100" manufactured by Denka Company Limited) as a conductive material, 2 parts by solid content equivalent of polyvinylidene fluoride (product name "#7208" manufactured by Kureha Corporation) as a binder for positive electrodes, and N-methylpyrrolidone so as to have a total solid content concentration of 70% by mass, using a planetary mixer.

The obtained slurry composition for positive electrodes was applied onto aluminum foil (current collector) of 20 $\mu$m in thickness using a comma coater so as to have a film thickness of approximately 150 $\mu$m after drying. The drying was done by conveying the copper foil inside an oven at a temperature of 60°C for 2 minutes at a speed of 0.5 m/minute. Thereafter, heat treatment was carried out for 2 minutes at a temperature of 120°C to obtain a pre-pressing positive electrode web. The pre-pressing positive electrode web was rolled by roll pressing to obtain a post-pressing positive electrode (single-sided positive electrode) including a positive electrode active material layer of 80 $\mu$m in thickness.

<Production of negative electrode>

A 5-MPa pressure vessel equipped with a stirrer was charged with 33 parts of 1,3-butadiene, 3.5 parts of itaconic acid, 63.5 parts of styrene, 0.4 parts of sodium dodecylbenzenesulfonate as an emulsifier, 150 parts of deionized water, and 0.5 parts of potassium persulfate as a polymerization initiator. The contents in the pressure vessel were sufficiently stirred and were then heated to 50 °C to initiate polymerization. The reaction was terminated by cooling at the point at which the polymerization conversion rate reached 96% to yield a mixture that contained a particulate binder for negative electrodes (styrene-butadiene copolymer (SBR)). A 5% sodium hydroxide aqueous solution was added to the mixture containing the binder for negative electrodes to adjust the pH to 8. Thereafter, unreacted monomer was removed by heated vacuum distillation and subsequently cooling was performed to 30°C or lower to yield a water dispersion containing a binder for negative electrodes.

Next, 100 parts of artificial graphite (volume average particle diameter D50: 15.6 $\mu$m) as a negative electrode active material, 1 part by solid content equivalent of a 2% aqueous solution of a sodium salt of carboxymethyl cellulose (MAC350HC manufactured by Nippon Paper Industries Co., Ltd.) as a thickener, and deionized water were mixed. Then, after the solid content concentration had been adjusted to 68% with deionized water, mixing was carried out for 60 minutes at 25°C. The solid content concentration was then adjusted to 62% with deionized water and a further 15 minutes of mixing was carried out at a temperature of 25°C. Thereafter, 1.5 parts by mass by solid content equivalent of the above-described binder for negative electrodes was added to the resultant mixed liquid, deionized water was used to adjust the final solid content concentration to 52%, and further mixing was carried out for 10 minutes. The resultant mixture was defoamed under reduced pressure to yield a slurry composition for negative electrodes having good fluidity.

The obtained slurry composition for negative electrodes was applied onto copper foil (current collector) of 20 $\mu$m in thickness using a comma coater so as to have a film thickness of approximately 150 $\mu$m after drying. The drying was done by conveying the copper foil inside an oven at a temperature of 60°C for 2 minutes at a speed of 0.5 m/minute. Thereafter, heat treatment was carried out for 2 minutes at a temperature of 120°C to obtain a pre-pressing negative electrode web. The resultant pre-press web of negative electrode was rolled with a roll press to afford a post-press negative electrode in which the negative electrode mixed material layer was 80 $\mu$m in thickness (single-sided negative electrode).

<Production of lithium ion secondary battery>

The post-pressing positive electrode obtained as described above was cut out as a square piece of 4 cm × 4 cm, and the post-pressing negative electrode was cut out to a square piece of 4.2 cm × 4.2 cm. The functional layer-attached separator provided with functional layers on both sides as obtained above was cut out into a piece of 5 cm × 5 cm. Next, the piece of the functional layer-attached separator was placed on the positive electrode mixed material layer of the piece of the post-pressing positive electrode. Furthermore, the piece of the post-pressing negative electrode was placed on a surface of the functional layer-attached separator not in contact with the positive electrode, such that the negative-electrode mixed material layer of the negative electrode faced to the functional layer of the functional layer-attached separator, to obtain a battery member laminate. Next, the obtained battery member laminate was pressed at a temperature of 70°C and a pressure of 5 MPa to cause the layers (positive electrode/functional layer-attached separator having functional layers on the both surfaces/negative electrode) to be securely adhered to each other.

The resultant battery member laminate was then enclosed in an aluminum packing case to be used as a battery case. An electrolyte solution (solvent: ethylene carbonate (EC)/diethyl carbonate (DEC)/vinylene carbonate (VC); volume ratio = 68.5/30/1.5); electrolyte: $LiPF_6$ of 1 mol/L in concentration) was injected into the aluminum packing case such that no air remained. Next, an opening of the aluminum packing case was heat sealed at a temperature of 150°C to tightly close the aluminum packing case and thereby produce a 40-mAh laminate-type lithium ion secondary battery.

The low-temperature output characteristic of the produced lithium ion secondary battery was then evaluated according to the above-described procedure. The results are listed in Table 1.

(Example 2)

A polymer A, a binder composition, a slurry composition, a functional layer-attached separator, a positive electrode, a negative electrode, and a lithium ion secondary battery were produced in the same manner as in Example 1, except that the amount of the binder composition was changed to 20.8 parts in terms of solid (polymer A) content and the amount of the polymer B was changed to 79.2 parts in terms of solid content to provide a polymer solution, in the preparation of the slurry composition.

The evaluations were then made in the same manner as in Example 1. The results are listed in Table 1.

(Example 3)

A polymer A, a binder composition, a slurry composition, a functional layer-attached separator, a positive electrode, a negative electrode, and a lithium ion secondary battery were produced in the same manner as in Example 1, except that the amount of the polymer solution was changed to 50 parts in terms of solid content, in the preparation of the slurry composition.

The evaluations were then made in the same manner as in Example 1. The results are listed in Table 1.

(Example 4)

A polymer A, a binder composition, a slurry composition, a functional layer-attached separator, a positive electrode, a negative electrode, and a lithium ion secondary battery were produced in the same manner as in Example 1, except that the amount of acrylonitrile (AN) as the (meth)acrylonitrile monomer was changed to 22 parts and the amount of ethyl acrylate (EA) as the (meth)acrylic acid ester monomer was changed to 68 parts, in the preparation of the polymer A.

The evaluations were then made in the same manner as in Example 1. The results are listed in Table 1.

(Example 5)

A polymer A, a binder composition, a slurry composition, a functional layer-attached separator, a positive electrode, a negative electrode, and a lithium ion secondary battery were produced in the same manner as in Example 1, except that the amount of ethyl acrylate (EA) as the (meth)acrylic acid ester monomer was changed to 72 parts and the amount of allyl glycidyl ether (AGE) as the epoxy group-containing monomer was changed to 8 parts, in the preparation of the polymer A.

The evaluations were then made in the same manner as in Example 1. The results are listed in Table 1.

(Example 6)

A polymer A, a binder composition, a slurry composition, a functional layer-attached separator, a positive electrode, a negative electrode, and a lithium ion secondary battery were produced in the same manner as in Example 1, except that the amount of ethyl acrylate (EA) as the (meth)acrylic acid ester monomer was changed to 79 parts and the amount of allyl glycidyl ether (AGE) as the epoxy group-containing monomer was changed to 1 parts, in the preparation of the polymer A.

The evaluations were then made in the same manner as in Example 1. The results are listed in Table 1.

(Example 7)

A polymer A, a binder composition, a slurry composition, a functional layer-attached separator, a positive electrode, a negative electrode, and a lithium ion secondary battery were produced in the same manner as in Example 1, except that the amount of ethyl acrylate (EA) as the (meth)acrylic acid ester monomer was changed to 76.5 parts, 3 parts of glycidyl methacrylate (GMA) was used as the epoxy group-containing monomer in place of allyl glycidyl ether, and 0.5 parts of 2-acrylamide-2-methyl propane sulfonic acid (AMPS) was added as an additional monomer, in the preparation of the polymer A.

The evaluations were then made in the same manner as in Example 1. The results are listed in Table 1.

(Example 8)

A polymer A, a binder composition, a slurry composition, a functional layer-attached separator, a positive electrode, a negative electrode, and a lithium ion secondary battery were produced in the same manner as in Example 1, except that the amount of ethyl acrylate (EN) as the (meth)acrylic acid ester monomer was changed to 61 parts and the amount of β-hydroxyethyl acrylate (β-HEA) as the hydroxyl group-containing monomer was changed to 19 parts, in the preparation of the polymer A.

The evaluations were then made in the same manner as in Example 1. The results are listed in Table 1.

(Example 9)

A polymer A, a binder composition, a slurry composition, a functional layer-attached separator, a positive electrode, a negative electrode, and a lithium ion secondary battery were produced in the same manner as in Example 1, except that the amount of ethyl acrylate (EN) as the (meth)acrylic acid ester monomer was changed to 78 parts and the amount of β-hydroxyethyl acrylate (β-HEA) as the hydroxyl group-containing monomer was changed to 2 parts, in the preparation of the polymer A.

The evaluations were then made in the same manner as in Example 1. The results are listed in Table 1.

(Example 10)

In the preparation of the binder composition, methyl ethyl ketone (boiling point of 79.5°C under 1 atm) was used as the organic solvent in place of acetone. In addition, in the preparation of the slurry composition, methyl ethyl ketone was used as the dispersion medium in place of acetone. Except for these differences, a polymer A, a binder composition, a slurry composition, a functional layer-attached separator, a positive electrode, a negative electrode, and a lithium ion secondary battery were produced in the same manner as Example 1.

The evaluations were then made in the same manner as in Example 1. The results are listed in Table 1.

(Example 11)

A polymer A, a binder composition, a slurry composition, a functional layer-attached separator, a positive electrode, a negative electrode, and a lithium ion secondary battery were produced in the same manner as in Example 1, except that the amount of the binder composition was changed to 50 parts in terms of solid (polymer A) content and the amount of the polymer B was changed to 50 parts in terms of solid content to provide a polymer solution, in the preparation of the slurry composition.

The evaluations were then made in the same manner as in Example 1. The results are listed in Table 1.

(Example 12)

A polymer A, a binder composition, a slurry composition, a functional layer-attached separator, a positive electrode, a negative electrode, and a lithium ion secondary battery were produced in the same manner as in Example 1, except that the amount of the binder composition was changed to 4 parts in terms of solid (polymer A) content and the amount of the polymer B was changed to 96 parts in terms of solid content to provide a polymer solution, in the preparation of the slurry composition.

The evaluations were then made in the same manner as in Example 1. The results are listed in Table 1.

(Example 13)

A polymer A, a binder composition, a slurry composition, a functional layer-attached separator, a positive electrode, a negative electrode, and a lithium ion secondary battery were produced in the same manner as in Example 1, except that the amount of the polymer solution as the component other than the non-conductive particles was changed to 82 parts in terms of solid content, in the preparation of the slurry composition.

The evaluations were then made in the same manner as in Example 1. The results are listed in Table 1.

(Example 14)

A polymer A, a binder composition, a slurry composition, a functional layer-attached separator, a positive electrode, a negative electrode, and a lithium ion secondary battery were produced in the same manner as in Example 1, except that the amount of the polymer solution as the component other than the non-conductive particles was changed to 12 parts in terms of solid content, in the preparation of the slurry composition.
The evaluations were then made in the same manner as in Example 1. The results are listed in Table 1.

(Example 15)

A polymer A, a binder composition, a slurry composition, a functional layer-attached separator, a positive electrode, a negative electrode, and a lithium ion secondary battery were produced in the same manner as in Example 1, except that the polymer solution was prepared such that the binder composition contained the polymer A as the only solid, and the amount of the polymer solution as the component other than the non-conductive particles was changed to 17 parts in terms of solid content, in the preparation of the slurry composition.
The evaluations were then made in the same manner as in Example 1. The results are listed in Table 1.

(Example 16)

A functional layer-attached separator having functional layers on both surfaces was not formed. A functional layer-attached positive electrode and a functional layer-attached negative electrode were formed in place of the positive electrode and the negative electrode, respectively, in the following procedure. In a production of a lithium ion secondary battery, a separator and a functional layer-attached positive electrode were used in place of the functional layer-attached separator and the positive electrode, respectively. Except for these differences, a polymer A, a binder composition, a slurry composition, a functional layer-attached positive electrode, a functional layer-attached negative electrode, and a lithium ion secondary battery were produced in the same manner as Example 1. In addition, a functional layer-attached separator having a functional layer on one surface thereof was produced for evaluating the blocking resistance.
The evaluations were then made in the same manner as in Example 1. The results are listed in Table 1.

<Formation of functional layer-attached positive electrode>

On a post-pressing positive-electrode mixed material layer obtained in the same manner as in Example 1, a slurry composition for functional layers obtained in the same manner as in Example 1 was applied by a wire bar, and was then dried at a temperature of 25°C for 3 minutes to obtain a functional layer-attached positive electrode having a functional layer in a thickness of 4 $\mu$m on one surface (the surface on the positive-electrode mixed material layer side).

<Formation of functional layer-attached negative electrode>

On a post-pressing negative-electrode mixed material layer obtained in the same manner as in Example 1, the slurry composition for functional layers obtained in the same manner as in Example 1 was applied by a wire bar, and was then dried at a temperature of 25°C for 3 minutes to obtain a functional layer-attached negative electrode having a functional layer in a thickness of 4 $\mu$m on one surface (the surface on the negative-electrode mixed material layer side).

(Comparative Example 1)

A polymer A, a binder composition, a slurry composition, a functional layer-attached separator, a positive electrode, a negative electrode, and a lithium ion secondary battery were produced in the same manner as in Example 1, except that no (meth)acrylonitrile monomer was used, the amount of ethyl acrylate (EA) as the (meth)acrylic acid ester monomer was changed to 83 parts, and the amount of allyl glycidyl ether (AGE) as the epoxy group-containing monomer was changed to 12 parts, in the preparation of the polymer A.
The evaluations were then made in the same manner as in Example 1. The results are listed in Table 1.

(Comparative Example 2)

A polymer A, a binder composition, a slurry composition, a functional layer-attached separator, a positive electrode, a negative electrode, and a lithium ion secondary battery were produced in the same manner as in Example 1, except that neither (meth)acrylonitrile monomer nor epoxy group-containing monomer was used, and the amount of ethyl acrylate (AN) as the (meth)acrylic acid ester monomer was changed to 95 parts, in the preparation of the polymer A.

The evaluations were then made in the same manner as in Example 1. The results are listed in Table 1.

(Comparative Example 3)

A polymer A, a binder composition, a slurry composition, a functional layer-attached separator, a positive electrode, a negative electrode, and a lithium ion secondary battery were produced in the same manner as in Example 1, except that no (meth)acrylonitrile monomer was used, the amount of ethyl acrylate (EN) as the (meth)acrylic acid ester monomer was changed to 70 parts, and the amount of β-hydroxyethyl acrylate (β-HEA) as the hydroxyl group-containing monomer was changed to 25 parts, in the preparation of the polymer A.

The evaluations were then made in the same manner as in Example 1. The results are listed in Table 1.

(Comparative Example 4)

A polymer A, a binder composition, a slurry composition, a functional layer-attached separator, a positive electrode, a negative electrode, and a lithium ion secondary battery were produced in the same manner as in Example 1, except that neither (meth)acrylonitrile monomer nor hydroxyl group-containing monomer was used, and the amount of ethyl acrylate (EA) as the (meth)acrylic acid ester monomer was changed to 95 parts, in the preparation of the polymer A.

The evaluations were then made in the same manner as in Example 1. The results are listed in Table 1.

(Comparative Example 5)

In the preparation of the binder composition, N-methyl-2-pyrrolidone (boiling point of 202°C under 1 atm) was used as the organic solvent in place of acetone. Further, in the preparation of the slurry composition, the amount of the binder composition was changed to 60 parts in terms of solid (polymer A) content and the amount of the polymer B was changed to 40 parts in terms of solid content to provide a polymer solution. Further, N-methyl-2-pyrrolidone was used as the dispersion medium, in place of acetone. Except for these differences, a polymer A, a binder composition, a slurry composition, a functional layer-attached separator, a positive electrode, a negative electrode, and a lithium ion secondary battery were produced in the same manner as Example 1.

The evaluations were then made in the same manner as in Example 1. The results are listed in Table 1.

(Comparative Example 6)

A polymer A, a binder composition, a slurry composition, a functional layer-attached separator, a positive electrode, a negative electrode, and a lithium ion secondary battery were produced in the same manners in Comparative Example 5, except that the amount of the binder composition was changed to 0.5 parts in terms of solid (polymer A) content and the amount of the polymer B was changed to 99.5 parts in terms of solid content to provide a polymer solution, and the amount of the polymer solution was changed to 24 parts in terms of solid content, in the preparation of the slurry composition.

The evaluations were then made in the same manner as in Example 1. The results are listed in Table 1.

(Comparative Example 7)

A polymer A, a binder composition, a slurry composition, a functional layer-attached separator, a positive electrode, a negative electrode, and a lithium ion secondary battery were produced in the same manners in Comparative Example 5, except that the amount of the binder composition was changed to 12.5 parts in terms of solid (polymer A) content and the amount of the polymer B was changed to 87.5 parts in terms of solid content to provide a polymer solution, and the amount of the polymer solution was changed to 122 parts in terms of solid content, in the preparation of the slurry composition.

The evaluations were then made in the same manner as in Example 1. The results are listed in Table 1.

(Comparative Example 8)

A polymer A, a binder composition, a slurry composition, a functional layer-attached separator, a positive electrode, a negative electrode, and a lithium ion secondary battery were produced in the same manners in Comparative Example 5, except that the amount of the binder composition was changed to 12.5 parts in terms of solid (polymer A) content and the amount of the polymer B was changed to 87.5 parts in terms of solid content to provide a polymer solution, and the amount of the polymer solution was changed to 4 parts in terms of solid content, in the preparation of the slurry composition.

The evaluations were then made in the same manner as in Example 1. The results are listed in Table 1.
In Table 1, shown below:

"AN" denotes acrylonitrile;
"EA" denotes ethyl acrylate;
"AGE" denotes allyl glycidyl ether;
"β-HEA" denotes β-hydroxyethyl acrylate unit;
"GMA" denotes glycidyl methacrylate;
"AMPS" denotes 2-acrylamido-2-methylpropane sulfonic acid;
"MEK" denotes methyl ethyl ketone;
"NMP" denotes N-methylpyrrolidone; and
"PVdF-HFP" denotes vinylidene fluoride-hexafluoropropylene copolymer.

Table 1

EP 3 595 039 A1

| | | Examples |||||||||||||||| Comparative Examples ||||||||
|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 1 | 2 | 3 | 4 | 5 | 6 | 7 | 8 |
| Organic solvents | | aceton | aceton | aceton | aceton | aceton | aceton | aceton | aceton | aceton | MEK | aceton | aceton | aceton | aceton | aceton | aceton | aceton | aceton | aceton | aceton | NMP | NMP | NMP | NMP |
| (Meth)acrylonitrile monomer unit | type | AN | AN | AN | AN | AN | AN | AN | AN | AN | AN | AN | AN | AN | AN | AN | AN | - | - | - | - | AN | AN | AN | AN |
| | parts by mass | 15 | 15 | 15 | 22 | 15 | 15 | 15 | 15 | 15 | 15 | 15 | 15 | 15 | 15 | 15 | 15 | 0 | 0 | 0 | 0 | 15 | 15 | 15 | 15 |
| (Meth)acrylic acid ester monomer unit | type | EA | EA | EA | EA | EA | EA | EA | EA | EA | EA | EA | EA | EA | EA | EA | EA | EA | EA | EA | EA | EA | EA | EA | EA |
| | parts by mass | 75 | 75 | 75 | 68 | 72 | 79 | 76.5 | 61 | 78 | 75 | 75 | 75 | 75 | 75 | 75 | 75 | 83 | 95 | 70 | 95 | 75 | 75 | 75 | 75 |
| Epoxy group-containing monomer unit | type | AGE | AGE | AGE | AGE | AGE | AGE | GMA | AGE | AGE | AGE | AGE | AGE | AGE | AGE | AGE | AGE | AGE | - | AGE | AGE | AGE | AGE | AGE | AGE |
| | parts by mass | 5 | 5 | 5 | 5 | 8 | 1 | 3 | 5 | 5 | 5 | 5 | 5 | 5 | 5 | 5 | 5 | 12 | 0 | 5 | 5 | 5 | 5 | 5 | 5 |
| Hydroxyl group-containing monomer unit | type | β-HEA | β-HEA | β-HEA | β-HEA | β-HEA | β-HEA | β-HEA | β-HEA | β-HEA | β-HEA | β-HEA | β-HEA | β-HEA | β-HEA | β-HEA | β-HEA | β-HEA | β-HEA | β-HEA | - | β-HEA | β-HEA | β-HEA | β-HEA |
| | parts by mass | 5 | 5 | 5 | 5 | 5 | 5 | 5 | 19 | 2 | 5 | 5 | 5 | 5 | 5 | 5 | 5 | 5 | 5 | 25 | 0 | 5 | 5 | 5 | 5 |
| Other non-fluorine-containing monomer unit | type | - | - | - | - | - | - | AMPS | - | - | - | - | - | - | - | - | - | - | - | - | - | - | - | - | - |
| | parts by mass | 0 | 0 | 0 | 0 | 0 | 0 | 0.5 | 0 | 0 | 0 | 0 | 0 | 0 | 0 | 0 | 0 | 0 | 0 | 0 | 0 | 0 | 0 | 0 | 0 |
| Proportion of THF insoluble component [% by mass] | | 55 | 55 | 55 | 55 | 90 | 40 | 80 | 55 | 55 | 55 | 55 | 55 | 55 | 55 | 55 | 55 | 97 | 30 | 55 | 55 | 55 | 55 | 55 | 55 |
| Degree of swelling in electrolyte solution [times] | | 15 | 15 | 15 | 15 | 10 | 23 | 12 | 6 | 28 | 15 | 15 | 15 | 15 | 15 | 15 | 15 | 15 | 15 | 15 | 15 | 15 | 15 | 15 | 15 |
| Amounts in polymer (in solid content) [parts by mass per 100 parts by mass of polymer A and polymer B] | | 12.5 | 20.8 | 12.5 | 12.5 | 12.5 | 12.5 | 12.5 | 12.5 | 12.5 | 12.5 | 50 | 4 | 12.5 | 12.5 | 100 | 12.5 | 12.5 | 12.5 | 12.5 | 12.5 | 60 | 0.50 | 12.5 | 12.5 |
| Polymer B Composition | | PVdF-HFP | PVdF-HFP | PVdF-HFP | PVdF-HFP | PVdF-HFP | PVdF-HFP | PVdF-HFP | PVdF-HFP | PVdF-HFP | PVdF-HFP | PVdF-HFP | PVdF-HFP | PVdF-HFP | PVdF-HFP | - | PVdF-HFP | PVdF-HFP | PVdF-HFP | PVdF-HFP | PVdF-HFP | PVdF-HFP | PVdF-HFP | PVdF-HFP | PVdF-HFP |
| Degree of swelling in electrolyte solution [times] | | 3 | 3 | 3 | 3 | 3 | 3 | 3 | 3 | 3 | 3 | 3 | 3 | 3 | 3 | - | 3 | 3 | 3 | 3 | 3 | 3 | 3 | 3 | 3 |
| Amounts in polymer solution (in solid content) [parts by mass per 100 parts by mass of polymer A and polymer B] | | 87.5 | 79.2 | 87.5 | 87.5 | 87.5 | 87.5 | 87.5 | 87.5 | 87.5 | 87.5 | 50 | 96 | 87.5 | 87.5 | 0 | 87.5 | 87.5 | 87.5 | 87.5 | 87.5 | 40 | 99.5 | 87.5 | 87.5 |
| Amounts (in solid content) [parts by mass] | | 26 | 26 | 50 | 26 | 26 | 26 | 26 | 26 | 26 | 26 | 26 | 26 | 82 | 12 | 17 | 26 | 26 | 26 | 26 | 26 | 26 | 24 | 122 | 4 |
| Non-conductive particles Materials | | alumina | alumina | alumina | alumina | alumina | alumina | alumina | alumina | alumina | alumina | alumina | alumina | alumina | alumina | alumina | alumina | alumina | alumina | alumina | alumina | alumina | alumina | alumina | alumina |
| Amounts [parts by mass] | | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Substrate constituting functional layers | | separator | separator | separator | separator | separator | separator | separator | separator | separator | separator | separator | separator | separator | separator | separator | Posi/nega electrodes | separator | separator | separator | separator | separator | separator | separator | separator |
| Evaluation Solubility of polymer components in binder composition | | A | A | A | B | B | A | A | B | B | B | A | A | A | A | A | A | B | C | B | C | C | C | C | C |
| Stability of slurry composition | | A | A | A | A | A | B | A | B | A | A | A | A | B | A | A | A | A | C | C | A | A | C | C | A |
| Blocking resistance of functional layer-attached battery member | | A | B | B | A | A | A | A | A | A | A | B | A | B | A | B | A | A | B | A | A | C | A | C | A |
| Adhesiveness of functional layer-attached battery member | | A | A | A | A | B | A | A | A | A | A | A | B | A | B | A | A | C | C | C | C | B | C | B | C |
| Low-temperature output characteristic of secondary battery | | A | A | B | A | A | B | A | B | B | A | B | B | B | A | B | A | C | C | A | A | B | B | B | A |

30

Table 1 indicates that Examples 1-16 which used the polymer A including a (meth)acrylonitrile monomer unit and a (meth)acrylic acid ester monomer unit and the organic solvent having a boiling point of 30°C or higher and 100°C or lower exhibited excellent solubility of the polymer components in the binder compositions, favorable bonding between battery members provided by the functional layers, and favorable low-temperature output characteristics of the secondary batteries, in well-balanced manner, as compared to Comparative Examples 1-4 in which polymer A contained no (meth)acrylonitrile monomer unit and Comparative Examples 5-8 in which the boiling points of the organic solvents exceeded 100°C.

INDUSTRIAL APPLICABILITY

In accordance with the present disclosure, a binder composition for functional layers is provided which has an excellent solubility of the polymer components and enables formation of functional layers capable of providing favorable bonding between battery members.

In accordance with the present disclosure, a functional layer capable of providing favorable bonding between battery members and enabling formation of a secondary battery with a favorable low-temperature output characteristic, a functional layer-attached separator having this functional layer, and a slurry composition for functional layers capable of forming this functional layer, are also provided.

Furthermore, in accordance with the present disclosure, a non-aqueous secondary battery having a favorable low-temperature output characteristic and a method of producing the same are provided.

**Claims**

1. A binder composition for non-aqueous secondary battery functional layers containing:

   a polymer A; and
   an organic solvent,
   wherein the organic solvent has a boiling point under 1 atm of 30°C or higher and 100°C or lower, and
   the polymer A contains a (meth)acrylonitrile monomer unit and a (meth)acrylic acid ester monomer unit.

2. The binder composition for non-aqueous secondary battery functional layers of claim 1, wherein the polymer A has a tetrahydrofuran insoluble content ratio of 35% by mass or more and 95% by mass or less.

3. The binder composition for non-aqueous secondary battery functional layers of claim 1 or 2, wherein the organic solvent is a polar solvent.

4. The binder composition for non-aqueous secondary battery functional layers of any one of claims 1-3, wherein the polymer A further contains 0.1% by mass or more and 10% by mass or less of an epoxy group-containing monomer unit.

5. The binder composition for non-aqueous secondary battery functional layers of any one of claims 1-4, wherein the polymer A further contains 0.1% by mass or more and 20% by mass or less of a hydroxyl group-containing monomer unit.

6. A slurry composition for non-aqueous secondary battery functional layers, comprising:

   non-conductive particles; and
   the binder composition for non-aqueous secondary battery functional layers of any one of claims 1-5.

7. The slurry composition for non-aqueous secondary battery functional layers of claim 6, further containing a polymer B, the Polymer B being a fluorine-containing polymer.

8. The slurry composition for non-aqueous secondary battery functional layers of claim 7, wherein the polymer A has a degree of swelling in electrolyte solution of 4 times or more and 30 times or less, and
   the polymer B has a degree of swelling in electrolyte solution of 1 time or more and 4 times or less.

9. The slurry composition for non-aqueous secondary battery functional layers of claim 8, wherein the degree of swelling in electrolyte solution of the polymer A is more than 4 times.

10. The slurry composition for non-aqueous secondary battery functional layers of any of claims 7-9, wherein a content of the polymer A is 1 part by mass or more and 50 parts by mass or less in terms of solid content, per 100 parts by mass of a total content of the polymer A and the polymer B.

11. The slurry composition for non-aqueous secondary battery functional layers of any one of claims 6-10, wherein a content of the component other than the non-conductive particles is 1 part by mass or more and 100 parts by mass or less in terms of solid content, relative to 100 parts by mass of the non-conductive particles.

12. A non-aqueous secondary battery functional layer formed from the slurry composition for non-aqueous secondary battery functional layers of any one of claims 6-11.

13. A functional layer attached-separator for a non-aqueous secondary battery, comprising:

a separator substrate; and
the non-aqueous secondary battery functional layer of claim 12, formed on at least one surface of the separator substrate.

14. The functional layer attached-separator for a non-aqueous secondary battery of claim 13, wherein the separator substrate is a porous resin film.

15. A non-aqueous secondary battery comprising:

a positive electrode;
a negative electrode;
a separator; and
the non-aqueous secondary battery functional layer of claim 12 between at least one of the positive electrode or the negative electrode, and the separator.

16. A method of producing the non-aqueous secondary battery of claim 15, the method comprising the step of:
bonding between at least one of the positive electrode or the negative electrode and the separator, by the non-aqueous secondary battery functional layer.

17. The method of producing the non-aqueous secondary battery of claim 16, wherein the step of bonding comprises:
pressing and/or heating a battery member laminate comprising the at least one of the positive electrode or the negative electrode, and the separator, having the non-aqueous secondary battery functional layer interposed therebetween.

**EP 3 595 039 A1**

## INTERNATIONAL SEARCH REPORT

| International application No. |
|---|
| PCT/JP2018/007853 |

A.  CLASSIFICATION OF SUBJECT MATTER
Int.Cl.  H01M2/16(2006.01)i, H01M4/13(2010.01)i, H01M10/058(2010.01)i

According to International Patent Classification (IPC) or to both national classification and IPC

B.  FIELDS SEARCHED

Minimum documentation searched (classification system followed by classification symbols)
Int.Cl.  H01M2/16, H01M4/13, H01M10/058

Documentation searched other than minimum documentation to the extent that such documents are included in the fields searched
    Published examined utility model applications of Japan     1922-1996
    Published unexamined utility model applications of Japan     1971-2018
    Registered utility model specifications of Japan     1996-2018
    Published registered utility model applications of Japan     1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2004-342572 A (NITTO DENKO CORPORATION) 02 December 2004, claims, paragraphs [0039], [0040], [0045], [0062], [0068]<br>& US 2004/0101757 A1, claims, paragraphs [0040], [0041], [0046], [0063], [0069] & EP 1432054 A1 | 1-6, 11-17<br>7-10 |

☒  Further documents are listed in the continuation of Box C.            ☐  See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11.04.2018 | 24.04.2018 |

| Name and mailing address of the ISA/ | Authorized officer |
|---|---|
| Japan Patent Office<br>3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

International application No.

PCT/JP2018/007853

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2007-35542 A (NITTO DENKO CORPORATION) 08 | 1-6, 11-17 |
| A | February 2007, paragraphs [0071], [0074] (Family: none) | 7-10 |
| X | JP 2007-35543 A (NITTO DENKO CORPORATION) 08 | 1-6, 11-17 |
| A | February 2007, paragraphs [0072], [0074] (Family: none) | 7-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4569718 B
- WO 2012115096 A
- JP 2013145763 A